(19) Europäisches Patentamt
European Patent Office
Office européen des brevets

(11) **EP 4 661 306 A1**

(12) **EUROPEAN PATENT APPLICATION**
published in accordance with Art. 153(4) EPC

(43) Date of publication:
**10.12.2025 Bulletin 2025/50**

(21) Application number: **24767286.8**

(22) Date of filing: **25.01.2024**

(51) International Patent Classification (IPC):
**H04B 7/0456** (2017.01)    **H04B 7/0452** (2017.01)
**H04L 25/03** (2006.01)    **H04W 88/08** (2009.01)
**H04W 92/20** (2009.01)

(52) Cooperative Patent Classification (CPC):
**H04B 7/0452; H04B 7/0456; H04L 25/03;
H04W 88/08; H04W 92/20**

(86) International application number:
**PCT/KR2024/001243**

(87) International publication number:
**WO 2024/185997 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.03.2023  KR 20230030128**

(71) Applicant: **Samsung Electronics Co., Ltd.
Suwon-si, Gyeonggi-do 16677 (KR)**

(72) Inventors:
• **YU, Hyoungyoul
  Suwon-si, Gyeonggi-do 16677 (KR)**
• **CHOI, Hyunjoo
  Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE AND METHOD FOR PROCESSING SIGNAL IN MULTIPLE INPUT MULTIPLE OUTPUT SYSTEM**

(57)    A method performed by a radio unit (RU) may comprise the steps of: acquiring first cell information about a first cell and second cell information about a second cell; identifying at least one first multiple input multiple output (MIMO) layer for the first cell and at least one second MIMO layer for the second cell among MIMO layers associated with a memory; identifying first address information for the at least one first MIMO layer from a first precoding matrix for the first cell and a precoding matrix for the MIMO layers; identifying second address information for the at least second MIMO layer from a second precoding matrix for the second cell and the precoding matrix; and storing, on the memory, the precoding matrix identified on the basis of the first precoding matrix, the second precoding matrix, the first address information, and the second address information.

FIG. 7A

## Description

### [Technical Field]

The present disclosure relates to a multiple input multiple output (MIMO) system, and more specifically, to an electronic device and a method for processing a signal in the MIMO system.

### [Background Art]

In order to improve signal transmission/reception performance, a multiple-input multiple-output (MIMO) technology is used. A wireless communication system using the MIMO technology uses multiple antennas at both a transmitting end and a receiving end. A channel capacity of the wireless communication system using the MIMO technology may be significantly improved compared to that of a single-antenna technology.

### [Disclosure]

### [Technical Solution]

According to embodiments, a method performed by a radio unit (RU), the method may comprise obtaining, from a digital unit (DU), first cell information with respect to a first cell and second cell information with respect to a second cell. The method may comprise, based on the first cell information and the second cell information, identifying at least one first multiple input multiple output (MIMO) layer for the first cell and at least one second MIMO layer for the second cell from among a plurality of MIMO layers associated with memory of the RU. The method may comprise, based on the first cell information, identifying first address information for the at least one first MIMO layer from a first precoding matrix for the first cell and a precoding matrix for the plurality of MIMO layers. The method may comprise, based on the second cell information, identifying second address information for the at least second MIMO layer from a second precoding matrix for the second cell and the precoding matrix. The method may comprise, storing, on the memory, the precoding matrix identified based on the first precoding matrix, the second precoding matrix, the first address information, and the second address information.

According to embodiments, an electronic device for a RU may comprise a processor. The RU may comprise memory. The RU may comprise a fronthaul interface. The RU may comprise a plurality of MIMO layers associated with the other memory. The processor may be configured to obtain, via the fronthaul interface from a DU, first cell information with respect to a first cell and second cell information with respect to a second cell. The processor may be configured to, based on the first cell information and the second cell information, identify at least one first MIMO layer for the first cell and at least one second MIMO layer for the second cell from among the plurality of MIMO layers. The processor may be configured to, based on the first cell information, identify first address information for the at least one first MIMO layer from a first precoding matrix for the first cell and a precoding matrix for the plurality of MIMO layers. The processor may be configured to, based on the second cell information, identify second address information for the at least second MIMO layer from a second precoding matrix for the second cell and the precoding matrix. The processor may be configured to store, on the other memory, the precoding matrix identified based on the first precoding matrix, the second precoding matrix, the first address information, and the second address information.

According to embodiments, a method performed by a RU, the method may comprise obtaining, from a DU, cell information for a cell. The method may comprise, based on the cell information, identifying a precoding matrix for a plurality of MIMO layers associated with a plurality of memories of the RU. The plurality of MIMO layers for the cell may include at least one first MIMO layer, at least one second MIMO layer, at least one third MIMO layer, and at least one fourth MIMO layer. The method may comprise, based on the precoding matrix, identifying first address information for the at least one first MIMO layer from a first precoding matrix for the at least one first MIMO layer and the precoding matrix. The method may comprise, based on the precoding matrix, identifying second address information for the at least one second MIMO layer from a second precoding matrix for the at least one second MIMO layer and the precoding matrix. The method may comprise, based on the precoding matrix, identifying third address information for the at least one third MIMO layer from a third precoding matrix for the at least one third MIMO layer and the precoding matrix. The method may comprise, identifying fourth address information for the at least one fourth MIMO layer from a fourth precoding matrix for the at least one fourth MIMO layer and the precoding matrix. The method may comprise, storing the first precoding matrix in a first memory from among the plurality of memories associated with the first address information, the second precoding matrix in a second memory from among the plurality of memories associated with the second address information, the third precoding matrix in a third memory from among the plurality of memories associated with the third address information, and the fourth precoding matrix in a fourth memory from among the plurality of memories associated with the fourth address information.

**[Description of the Drawings]**

FIG. 1 illustrates an example of a wireless communication system.

FIG. 2 illustrates an example of a fronthaul interface.

FIG. 3A illustrates an example of a functional configuration of a digital unit (DU).

FIG. 3B illustrates an example of a functional configuration of a radio unit (RU).

FIG. 4 illustrates an example of a function split between a DU and an RU.

FIGS. 5A to 5C illustrate examples of an RU for at least one cell.

FIG. 6A illustrates an example of an RU architecture for one cell.

FIG. 6B illustrates an example of an RU architecture for a plurality of cells.

FIG. 7A illustrates an example of a method for supporting a plurality of cells by using an RU architecture for one cell.

FIG. 7B illustrates an example of a bit string for an 8x8 precoding matrix identified based on bit strings for 4x4 precoding matrices.

FIG. 8 illustrates an example of an operation flow supporting a plurality of cells through an RU architecture for one cell.

FIGS. 9A and 9B illustrate an example of a method of supporting one cell through an RU architecture for a plurality of cells.

FIG. 9C illustrates an example of a bit string for four 4x4 precoding matrices identified based on bit strings for an 8x8 precoding matrix.

FIG. 10 illustrates an example of an operation flow supporting one cell through an RU architecture for a plurality of cells.

**[Mode for Invention]**

Terms used in the present disclosure are used only to describe a specific embodiment and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to signal (e.g., packet, message, signal, information, signaling), terms referring to resource (e.g., section, symbol, slot, subframe, radio frame, subcarrier, resource element (RE), resource block (RB), bandwidth part (BWP), occasion), terms referring to operation state (e.g., step, operation, procedure), terms referring to data (e.g., packet, message, user stream, information, bit, symbol, codeword), terms referring to channel, terms referring to network entity (e.g., distributed unit (DU), digital unit (DU), radio unit (RU), central unit (CU), CU-control plane(CP), CU-user plane(UP), open radio access network (O-RAN) DU (O-DU), O-RAN RU (O-RU), O-RAN CU (O-CU), O-RAN CU-CP (O-CU-UP), O-RAN CU-CP (O-CU-CP)), and terms referring to components of a device, used in the following description are exemplified for convenience of explanation. Therefore, the present disclosure is not limited to terms to be described below, and another term having an equivalent technical meaning may be used. In addition, a term such as '...unit, '...device, '...object, and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes embodiments using terms used in some communication standards (e.g., 3rd Generation Partnership Project (3GPP)), these are only examples for explanation. The various embodiments of the present disclosure may be easily modified and applied to other communication systems.

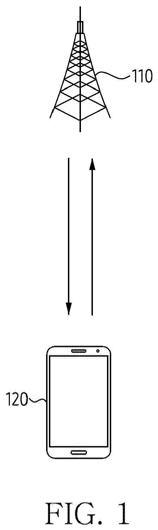

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE)', 'customer premises equipment, (CPE)', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information related to the beam. The information related to the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

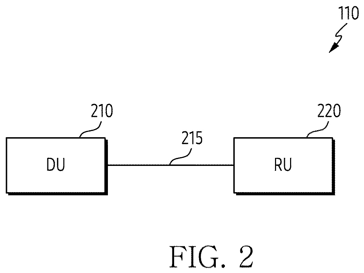

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, an architecture in which the DU and RU of the base station are separated, one or more RUs are connected to one DU through a wired network, and one or more Rus geographically distributed to cover a specific area are deployed, has been proposed. Hereinafter, a deployment architecture and expansion examples of a base station according to various embodiments of the present disclosure are described through FIGS. 2A and 2B.

FIG. 2 illustrates a fronthaul interface. Unlike a backhaul between a base station and a core network, the fronthaul refers to a section between entities between a radio access network (RAN) and a base station.

FIG. 2 illustrates an example of a fronthaul architecture between one DU 210 and one RU 220, but this is only for convenience of explanation and the present disclosure is not limited thereto. In other words, the embodiments of the present disclosure may also be applied to a fronthaul architecture between one DU and a plurality of RU. For example, the embodiments of the present disclosure may be applied to a fronthaul architecture between one DU and two RU. In addition, the embodiments of the present disclosure may also be applied to a fronthaul architecture between one DU and three RU.

Referring to FIG. 2, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2 describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio access network (RAN), the base station may be implemented in an architecture in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

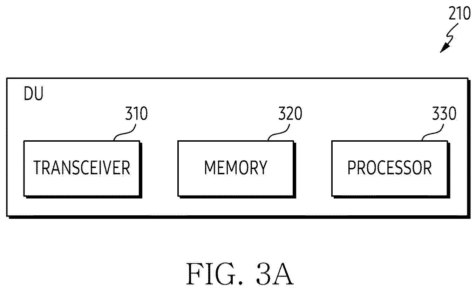

FIG. 3A illustrates an example of a functional configuration of a digital unit (DU) according to embodiments.

A configuration exemplified in FIG. 3A, which is as a part of a base station, may be understood as a configuration of the DU 210 of FIG. 2. Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

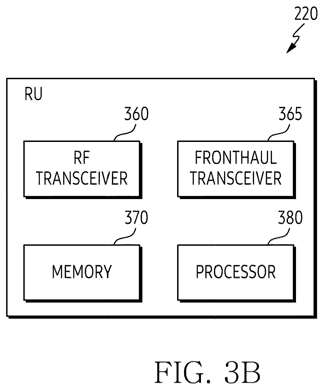

FIG. 3B illustrates an example of a functional configuration of a radio unit (RU) according to embodiments.

A configuration exemplified in FIG. 3B, which is as a part of a base station, may be understood as a configuration of the RU 220 of FIG. 2. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization-plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

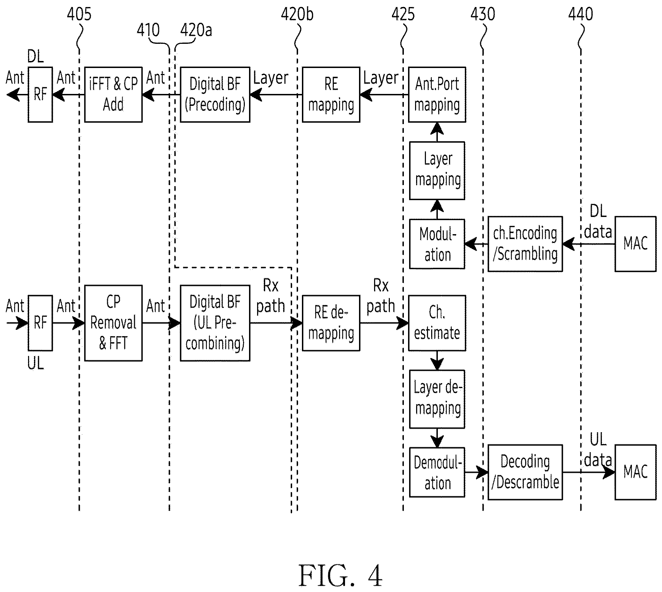

FIG. 4 illustrates an example of a function split between a DU and an RU.

As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, a first function split in which the RU performs the RF function, and the DU performs the PHY function is substantially such that the PHY function is not implemented within the RU, and, for example, may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/-scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that the RU can not process precoding of data received from the DU (i.e., in a case that there is a limit to the precoding capability of the RU), the third function split 420a or a lower function split (e.g., the second function split 410) may be applied. Conversely, in a case that the RU has a capability to process precoding of data received from the DU, the fifth function split 425 or a higher function split (e.g., the sixth function split 430) may be applied.

In the O-RAN standard, the type of O-RU (or RU) is distinguished according to whether the precoding function is located at an interface of the O-DU or an interface of the O-RU. For example, an O-RU in which precoding is not performed (i.e., low complexity) may be referred to as a CAT-A O-RU. Alternatively, an O-RU in which precoding is performed may be referred to as a CAT-B O-RU.

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits.

The embodiments of the present disclosure exemplarily describe standards of eCPRI and O-RAN as a fronthaul interface when transmitting a message between a DU (e.g., the DU 210) of FIG. 2) and an RU (e.g., the RU 220 of FIG. 2). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.

1) ecpriVersion (4 bits): This parameter indicates an eCPRI protocol version.

2) ecpriReserved (3 bits): This parameter is reserved for further use of eCPRI.

3) ecpriConcatenation (1 bit): This parameter indicates when eCPRI concatenation is in use.

4) ecpriMessage (1 byte): This parameter indicates a type of a service carried by a message type. For example, the parameter indicates an IQ data message, a real-time control data message, or a transport network delay measurement message.

5) ecpriPayload (2 bytes): This parameter indicates a byte size of a payload portion of the eCPRI message.

6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.

7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier ('BandSector_ID'), a component carrier identifier ('CC_ID'), a spatial stream identifier ('RU_Port_ID'), and a distributed unit identifier ('DU_Port_ID'). The bit allocation of the eAxC ID may be distinguished as follows.

1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.
2) BandSector_ID: Aggregated cell identifier (identification of band and sector supported by O-RU).
3) CC_ID: CC_ID identifies carrier components supported by the O-RU.
4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes of Section Type are as follows.

1) sectionType=0: Used to indicate resource blocks or symbols not used in the DL or the UL.
2) sectionType=1: Used for most DL/UL wireless channels. Herein, "most" refers to channels that do not require time or frequency offsets such as those required for mixed numerology channels.
3) sectionType=2: reserved for further use
4) sectionType=3: PRACH and mixed-numerology channels. Channels that require time or frequency offsets or differ from the nominal SCS value(s).
5) sectionType=4: reserved for further use
6) sectionType=5: UE scheduling information. Transmits UE scheduling information so that the RU can perform real-time BF weight calculation (O-RAN optional BF method)
7) sectionType=6: Transmit UE-specific channel information. Periodically transmits UE channel information so that the RU can perform real-time BF weight calculation (O-RAN optional BF method)
8) sectionType=7: Used for LAA support

ORAN is an organization that defines and handles a fronthaul interface standard between a DU and an RU according to various function split architectures, and provides a standard interface in a split architecture (e.g., 7-2 function split architecture) applying Ethernet. Hereinafter, unless otherwise specified, embodiments in the present disclosure are described based on the 7-2 function split architecture (e.g., fifth function split 425) for performing precoding at the RU.

In the MIMO system, the RU 220 may include a plurality of antenna elements. The RU 220 may support at least one cell by using the plurality of antenna elements. The cell may indicate a unit in which the base station 110 including the RU 220 provides a service. The fact that the RU 220 supports a cell may indicate that the RU 220 or the base station 110 including the RU 220 provides a service for the cell.

In a case that the RU 220 changes from supporting a cell to supporting a plurality of cells using the plurality of antenna elements (or from supporting a plurality of cells to supporting a cell), a function of a processor 380 of the RU 220 may be required to change. For example, a change in a function of a field programmable gate array (FPGA) including the processor 380 or an application specific integrated circuit (ASIC) may be required. Alternatively, a design of the FPGA or the ASIC to support all network environments in which the RU 220 may be used may be required. However, in consideration of hardware resources, the change or the design may be limited.

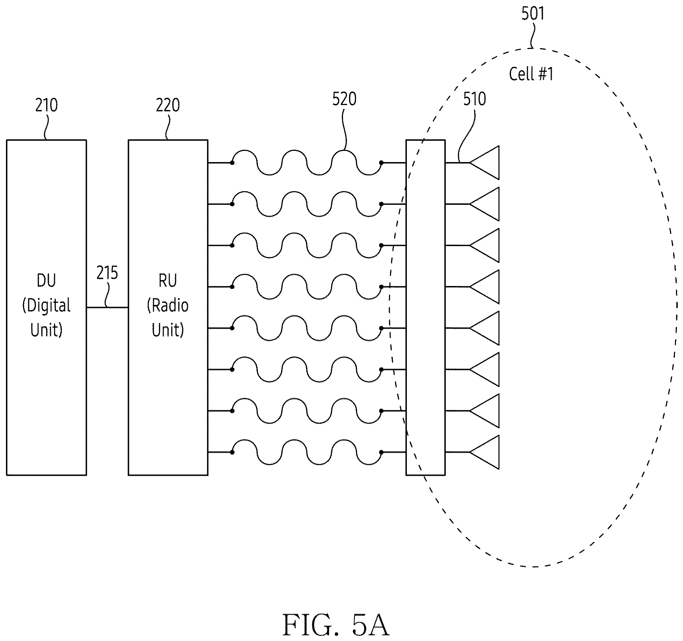

FIGS. 5A to 5C illustrate examples of an RU for at least one cell.

The cell may indicate a unit in which the base station 110 (or the RU 220) provides a service. For example, the cell may indicate a service area corresponding to a specific space. For example, the cell may be referred to as a sector. However, the cell may not be limited to a spatially distinguishable unit. For example, the cell may indicate a service area identified based on a specific frequency band. Hereinafter, in the present disclosure, for convenience of explanation, the cell is described as meaning a spatially distinguishable unit.

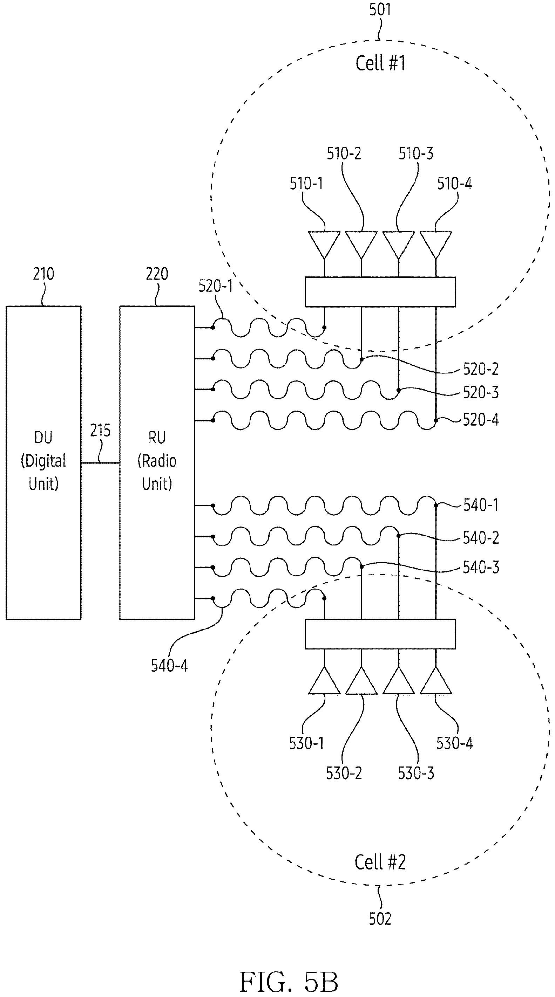

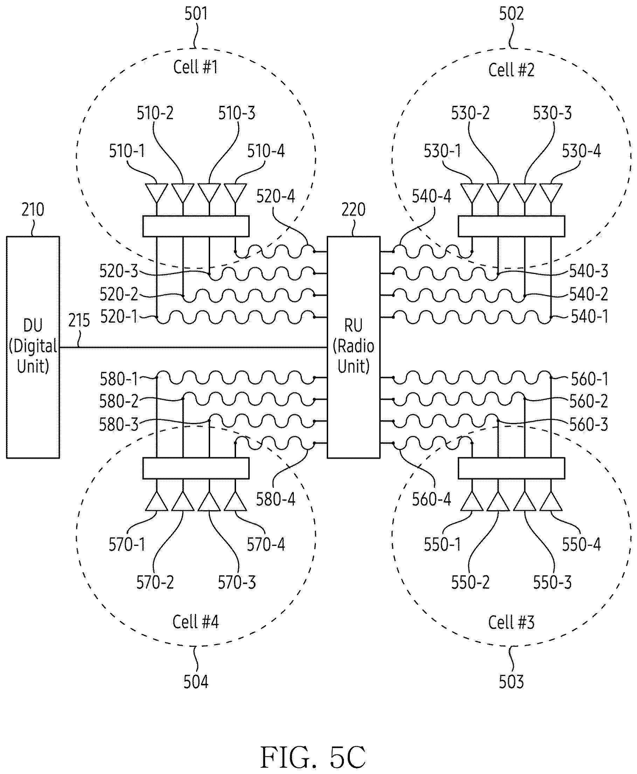

FIG. 5A illustrates an example of the base station 110 that provides a service for one cell. FIG. 5B illustrates an example of the base station 110 that provides a service for two cells. FIG. 5C illustrates an example of the base station 110 that provides a service for four cells. The same reference numerals may be used for the same description.

Referring to FIGS. 5A to 5C, the base station 110 may include a DU 210 and an RU 220. For example, the DU 210 may be connected to the RU 220 through a fronthaul 215. For example, the fronthaul 215 may be referred to as a fronthaul interface. For example, the fronthaul 215 may be formed of an optical cable (or optical fiber cable). For example, the base station 110 may use a function split between the DU 210 and the RU 220 in consideration of a limitation of transmission capacity of the optical cable.

Referring to FIG. 5A, the RU 220 may include a plurality of antenna elements 510 for a first cell 501. For example, the RU 220 may include eight antenna elements 510 to provide a service for the first cell 501. For example, the RU 220 may include power supply cables 520 to arrange the antenna elements 510 within various installation environments. For example, the RU 220 may include power supply cables 520 for adjusting a position or direction of the antenna elements 510 based on the first cell 501. For example, the number of power supply cables 520 may be configured to be the same as the number of antenna elements 510. For example, the RU 220 may include eight power supply cables 520. However, the embodiment of the present disclosure is not limited thereto, and at least a portion of the power supply cables 520 may be configured through one cable.

Referring to FIG. 5A, the RU 220 may provide a service for one first cell 501 by using eight antenna elements 510. For example, the RU 220 may transmit a first signal on the first cell 501 by using eight antenna elements 510.

Referring to FIG. 5B, the RU 220 may include a plurality of antenna elements 510 for a first cell 501 and a second cell 502. For example, the RU 220 may include four antenna elements 510-1, 510-2, 510-3, and 510-4 to provide a service for the first cell 501. For example, the RU 220 may include four antenna elements 530-1, 530-2, 530-3, and 530-4 to provide a service for the second cell 502.

For example, the RU 220 may include power supply cables 520 to arrange antenna elements 510 within various installation environments. For example, the RU 220 may include power supply cables 520 for adjusting a position or direction of the antenna elements 510 based on the first cell 501 or the second cell 502. For example, the number of power supply cables 520 may be configured to be the same as the number of antenna elements 510. For example, the RU 220 may include four power supply cables 520-1, 520-2, 520-3, and 520-4 corresponding to the four antenna elements 510-1, 510-2, 510-3, and 510-4. For example, the RU 220 may include four power supply cables 540-1, 540-2, 540-3, and 530-4 corresponding to the four antenna elements 530-1, 530-2, 530-3, and 530-4. However, the embodiment of the present disclosure is not limited thereto, and at least a portion of the power supply cables 520 may be configured through one cable.

Referring to FIG. 5B, the RU 220 may provide a service for the first cell 501 and the second cell 502 by using eight antenna elements 510. For example, the RU 220 may transmit a first signal on the first cell 501 by using four antenna elements 510-1, 510-2, 510-3, and 510-4. For example, the RU 220 may transmit a second signal on the second cell 502 by using four antenna elements 530-1, 530-2, 530-3, and 530-4.

Referring to FIG. 5C, the RU 220 may include a plurality of antenna elements for a first cell 501, a second cell 502, a third cell 503, and a fourth cell 504. For example, the RU 220 may include four antenna elements 510-1, 510-2, 510-3, and 510-4 to provide a service for the first cell 501. For example, the RU 220 may include four antenna elements 530-1, 530-2, 530-3, and 530-4 to provide a service for the second cell 502. For example, the RU 220 may include four antenna elements 550-1, 550-2, 550-3, and 550-4 to provide a service for the third cell 503. For example, the RU 220 may include four antenna elements 570-1, 570-2, 570-3, and 570-4 to provide a service for the fourth cell 504.

For example, the RU 220 may include power supply cables to provide a service to a cell within various installation environments through antenna elements. For example, the RU 220 may include power supply cables 520 for adjusting a position or direction of the antenna elements 510 based on the first cell 501. For example, the RU 220 may include power supply cables 540 for adjusting a position or direction of the antenna elements 530 based on the second cell 502. For example, the RU 220 may include power supply cables 560 for adjusting a position or direction of the antenna elements 550 based on the third cell 503. For example, the RU 220 may include power supply cables 580 for adjusting a position or direction of the antenna elements 570 based on the fourth cell 504. For example, the number of power supply cables may be configured to be the same as the number of antenna elements. For example, the RU 220 may include four power supply cables 520-1, 520-2, 520-3, and 520-4 corresponding to four antenna elements 510-1, 510-2, 510-3, and 510-4. For example, the RU 220 may include four power supply cables 540-1, 540-2, 540-3, and 540-4 corresponding to four antenna elements 530-1, 530-2, 530-3, and 530-4. For example, the RU 220 may include four power supply cables 560-1, 560-2, 560-3, and 560-4 corresponding to four antenna elements 550-1, 550-2, 550-3, and 550-4. For example, the RU 220 may include four power supply cables 580-1, 580-2, 580-3, and 580-4 corresponding to four antenna elements 570-1, 570-2, 580-3, and 570-4. However, the embodiment of the present disclosure is not limited thereto, and at least a portion of the power supply cables may be configured through one cable.

Referring to FIG. 5C, the RU 220 may provide a service for the first cell 501, the second cell 502, the third cell 503, and the fourth cell 504 by using 16 antenna elements. For example, the RU 220 may transmit a first signal on the first cell 501 by using four antenna elements 510-1, 510-2, 510-3, and 510-4. For example, the RU 220 may transmit a second signal on the second cell 502 by using four antenna elements 530-1, 530-2, 530-3, and 530-4. For example, the RU 220 may transmit a third signal on the third cell 503 by using four antenna elements 550-1, 550-2, 550-3, and 550-4. For example, the RU 220 may transmit a fourth signal on the fourth cell 504 by using four antenna elements 570-1, 570-2, 570-3, and 570-4.

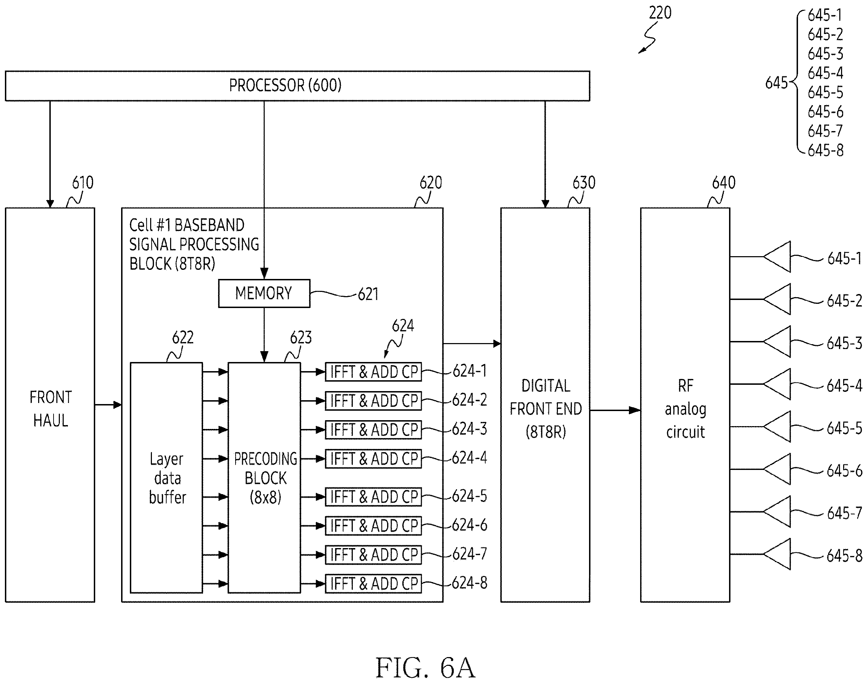

FIG. 6A illustrates an example of an RU architecture for one cell.

The RU 220 of FIG. 6A illustrates an example of components of the RU 220 illustrated in FIG. 5A. The RU 220 of FIG. 6A may illustrate an example of the RU 220 of FIG. 2. For example, the RU 220 of FIG. 6A may be connected to a DU (not illustrated) (e.g., the DU 210 of FIG. 2) through a fronthaul 610. For example, the fronthaul 610 may include a fronthaul transceiver 365 of FIG. 3B.

Referring to FIG. 6A, the RU 220 may include a processor 600, a fronthaul 610, a baseband signal processing block 620, a digital front end 630, and a radio frequency analog circuit (RF analog circuit) 640. However, the embodiment of the present disclosure is not limited thereto. For example, the RU 220 may further include or include fewer components illustrated in FIG. 6A.

For example, the processor 600 may indicate a component to which an operating system (OS) and software have been uploaded. For example, the processor 600 may operate based on the OS and/or the software programming.

For example, the processor 600 may identify setting information based on data obtained from a DU (not illustrated) by the fronthaul 610. For example, the processor 600 may obtain cell addition information (hereinafter, cell information) obtained from the DU. The cell information may be obtained for each cell. For example, in case of providing a service for the first cell 501 like the RU 220 of FIG. 5A, the RU 220 may obtain cell information for the first cell 501. For example, the cell information may include at least one of the number of antenna elements of the RU 220 used to transmit and receive a signal on the first cell 501, an antenna port of the antenna element of the RU 220 used to transmit and receive the signal, the number of layers (or MIMO layers) associated with the antenna elements, an index for indicating a precoding matrix (e.g., a precoding matrix indicator (PMI)), or information indicating a type of a codebook including the precoding matrix.

For example, the number of the antenna elements may include four (4T4R) and eight (8T8R). However, the embodiment of the present disclosure is not limited thereto. The number of the antenna elements may be set to more than 8 or less than 4. For example, the antenna port may indicate antenna port information with respect to the antenna element used to transmit and receive the signal. For example, in a case that only four antenna elements are used to transmit and receive a signal on the cell even when the RU 220 includes eight antenna elements, it may indicate antenna port information with respect to each of the four antenna elements. For example, a type of the codebook may include single user-MIMO (SU-MIMO) or multiple user-MIMO (MU-MIMO).

For example, the cell information may include information for generating the precoding matrix for the first cell 501. For example, the information may include bit strings for the precoding matrix and precoding weights corresponding to the bit strings.

For example, the processor 600 may control the baseband signal processing block 620, the digital front end 630, and the RF analog circuit 640 based on the identified setting information. For example, the processor 600 may store, in memory 621, a plurality of precoding matrices for performing precoding, as described later. For example, the processor 600 may control the digital front end 630 and the RF analog circuit 640 to process a signal generated by applying a precoding matrix to an input signal.

For example, the RU 220 may obtain data from a DU (not illustrated) using the fronthaul 610. For example, the data may include parameter data for control and traffic data indicating information that is actually intended to be transmitted. For example, the data may include in-phase/quadrature (I/Q) data or an I/Q signal. The traffic data may be referred to as an input signal.

For example, the baseband signal processing block 620 may include components for processing the data obtained through the fronthaul 610. For example, the baseband signal processing block 620 may include the memory 621, a layer data buffer (hereinafter referred to as buffer) 622, a precoding block 623, and a plurality of inverse fast Fourier transform (IFFT) and cyclic prefix (CP) add blocks 624.

For example, the memory 621 may indicate memory including information for precoding. For example, the information for precoding may include a plurality of precoding matrices. The plurality of precoding matrices may be referred to as a codebook. The memory 621 may include a plurality of codebooks. For example, the precoding matrix may include PMI, a bit string indicating a location (or address) of a row of the precoding matrix and a location (or address) of a column of the precoding matrix, and a precoding weight indicating a value of an element of the precoding matrix corresponding to the location of the row and the location of the column. In other words, the precoding matrix may include a plurality of bit strings and a plurality of precoding weights. For example, a 4x4 precoding matrix may include 16 bit strings and 16 weights. For example, a 8x8 precoding matrix may include 64 bit strings and 64 weights. For example, the memory 621 may be included in the memory 370 of FIG. 3. Although FIG. 6A illustrates that the memory 621 is included in the baseband signal processing block 620, the present disclosure is not limited thereto. For example, the memory 621 may be included in a component different from the baseband signal processing block 620, or may be included in the RU 220 independently.

For example, the buffer 622 may align the data (or input signal) obtained from the fronthaul 610 for each layer. The layer may be referred to as a MIMO layer. In the example of FIG. 6A, the RU 220 including eight antenna elements (645-1 to 645-8) may include eight MIMO layers. In the present disclosure, for convenience of explanation, one MIMO layer may be defined as being associated with one antenna element.

For example, the precoding block 623 may perform precoding on the data (or input signal) aligned for each layer. For example, the precoding block 623 may use an 8x8 precoding matrix to perform precoding on the data aligned with eight MIMO layers. For example, the $8\times8$ precoding matrix may be a precoding matrix obtained from the memory 621. For example, the precoding block 623 may use a precoding matrix corresponding to the number of layers identified based on the cell information.

For example, each of the plurality of IFFT&CP add blocks 624 may perform IFFT conversion on the data (or input signal) processed through the precoding block 623 and add CP. For example, an IFFT&CP add block 624-1 may perform IFFT conversion on the data (or input signal) for a first MIMO layer and add CP. For example, the first MIMO layer may indicate a layer associated with an antenna element 645-1. As described above, a data processing flow may indicate a processing flow in a case of processing a downlink signal. For example, in a case of processing an uplink signal, each of the plurality of IFFT&CP add blocks 624 may remove CP and perform FFT conversion.

For example, the number of baseband signal processing blocks 620 included in the RU 220 may correspond to the number of cells supported by the RU 220 (or base station 110). The RU 220 of FIG. 6A is an example of a situation in which the RU 220 of FIG. 5A supports only the first cell 501, and the RU 220 may include only one baseband signal processing block 620.

For example, the digital front end 630 may perform mapping to a corresponding antenna element for each of the data processed by the baseband signal processing block 620. In addition, the digital front end 630 may include a digital up converter (DUC) or a digital down converter (DDC). In a case of downlink (i.e., in a case of transmitting), the DUC may convert each of the data, which is a baseband signal, into a digital intermediate frequency (IF) signal. In a case of uplink (i.e., in a case of receiving), the DDC may convert the digital IF signals into a plurality of baseband signals. For example, the digital front end 630 may include a crest factor reduction (CFR) and a digital pre distortion (DPD). The CFR may indicate a component for reducing a peak to average power ratio (PAPR) of a baseband signal. The DPD may indicate a component for outputting a linear signal by applying a predistortion with respect to the baseband signal processed by the CFR.

For example, the RF analog circuit 640 may include components that convert and process a baseband signal (or IF signal) processed from the digital front end 630 into an RF signal. For example, the RF analog circuit 640 may include a digital to analog converter (DAC), an analog to digital converter (ADC), a power amplifier, and antenna elements 645. However, the embodiment of the present disclosure is not limited thereto, and the RF analog circuit 640 may further include or may include fewer components in addition to the above-described components. For example, each of antenna elements 645 may correspond to a MIMO layer.

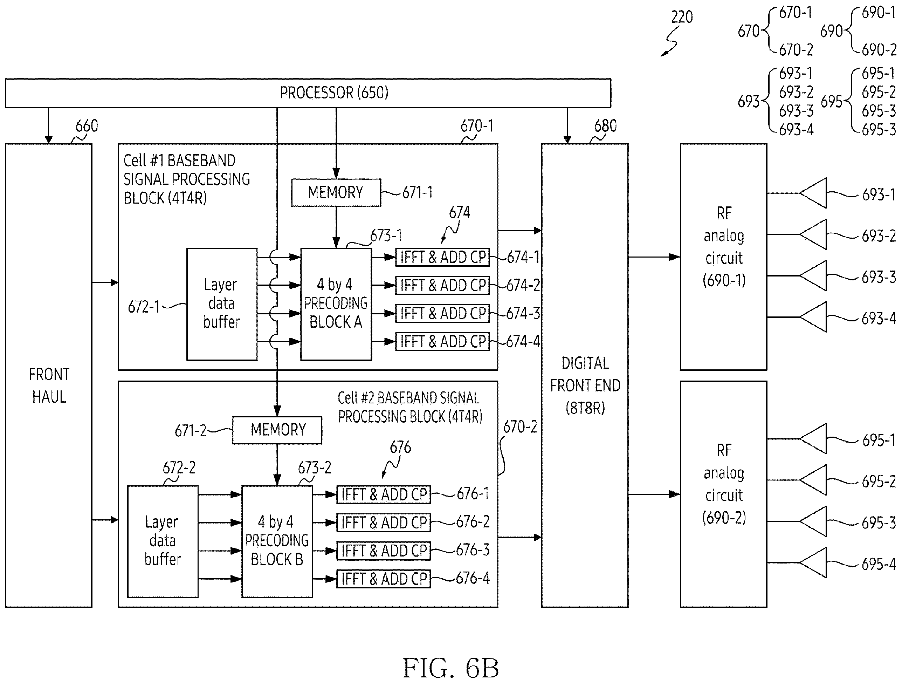

The RU 220 of FIG. 6A illustrates an RU architecture supporting one cell (e.g., the first cell 501). Accordingly, the RU 220 may obtain cell information on the first cell 501 from the DU. However, the embodiment of the present disclosure is not limited thereto. As described later with reference to FIG. 6B, when a service is provided for a plurality of cells, the RU 220 may obtain cell information for each of the plurality of cells.

FIG. 6B illustrates an example of an RU architecture for a plurality of cells.

The RU 220 of FIG. 6B illustrates an example of components of the RU 220 illustrated in FIG. 5B. The RU 220 of FIG. 6B may indicate an example of the RU 220 of FIG. 2. For example, the RU 220 of FIG. 6B may be connected to a DU (not illustrated) (e.g., the DU 210 of FIG. 2) through a fronthaul 610. For example, the fronthaul 610 may include the fronthaul transceiver 365 of FIG. 3B.

Referring to FIG. 6B, the RU 220 may include a processor 650, a fronthaul 660, a plurality of baseband signal processing blocks 670-1 and 670-2, a digital front end (DFE) 680, and radio frequency analog circuits (RF analog circuits) 690-1 and 690-2. However, the embodiment of the present disclosure is not limited thereto. For example, the RU 220 may further include or include fewer the components of FIG. 6B.

For example, the processor 650 may indicate a component to which an operating system (OS) and software have been uploaded. For example, the processor 650 may operate based on the OS and/or the software programming.

For example, the processor 650 may identify setting information based on data obtained by the fronthaul 660 from a DU (not illustrated). For example, the processor 650 may obtain cell addition information (hereinafter, cell information) obtained from the DU. The cell information may be obtained for each cell. For example, in a case of providing a service for the first cell 501 and the second cell 502 like the RU 220 of FIG. 5B, the RU 220 may obtain cell information for the first cell 501 and cell information for the second cell 502. For example, the cell information may include at least one of the number of antenna elements of the RU 220 used to transmit and receive a signal on the first cell 501 and the second cell 502, an antenna port of the antenna element of the RU 220 used to transmit and receive the signal, the number of layers (or MIMO layers) associated with the antenna elements, an index for indicating a precoding matrix (e.g., a precoding matrix indicator (PMI)), or information indicating a type of a codebook including the precoding matrix.

For example, the number of the antenna elements may include four (4T4R) and eight (8T8R). However, the embodiment of the present disclosure is not limited thereto. The number of the antenna elements may be set to more than eight or less than four. The number of the antenna elements included in the RU 220 of FIG. 6B is a total of 8, but the RU 220 may include an architecture supporting two cells (the first cell 501 and the second cell 502) based on 4T4R. For example, the antenna port may indicate antenna port information for the antenna element used to transmit and receive the signal. For example, the RU 220 may include eight antenna elements, but may indicate antenna port information for each of antenna elements 693-1, 693-2, 693-3, and 693-4 for transmitting and receiving signals on the first cell 501 or antenna elements 695-1, 695-2, 695-3, and 695-4 for transmitting and receiving signals on the second cell 502. For example, a type of the codebook may include single user-MIMO (SU-MIMO) or multiple user-MIMO (MU-MIMO).

For example, the cell information for the first cell 501 may include information for generating the precoding matrix for the first cell 501. For example, the information may include bit strings for the precoding matrix and precoding weights corresponding to the bit strings. The cell information for the second cell 502 may include information for generating the precoding matrix for the second cell 502. For example, the information may include bit strings for the precoding matrix and precoding weights corresponding to the bit strings.

For example, the processor 650 may control baseband signal processing blocks 670-1 and 670-2, a digital front end 680, and RF analog circuits 690-1 and 690-2, based on the identified setting information. For example, the processor 650 may store, in memory 671-1 and 671-2, a plurality of precoding matrices for performing precoding, as described later. For example, the processor 650 may control the digital front end 680 and RF analog circuits 690 to process a signal generated by applying a precoding matrix to an input signal.

For example, the RU 220 may obtain data from a DU (not illustrated) by using the fronthaul 660. For example, the data may include parameter data for control and traffic data indicating information that is actually intended to be transmitted. For example, the data may include in-phase/quadrature (I/Q) data or an I/Q signal. The traffic data may be referred to as an input signal.

For example, a first baseband signal processing block 670-1 may include components for processing the data obtained through the fronthaul 660. For example, the first baseband signal processing block 670-1 may include the memory 671-1, a layer data buffer (hereinafter referred to as buffer) 672-1, a precoding block 673-1, and a plurality of inverse fast Fourier transform (IFFT) and cyclic prefix (CP) add blocks 674.

For example, a seconnd baseband signal processing block 670-2 may include components for processing the data obtained through the fronthaul 660. For example, the second baseband signal processing block 670-2 may include the memory 671-2, a layer data buffer (hereinafter referred to as buffer) 672-2, a precoding block 673-2, and a plurality of inverse fast Fourier transform (IFFT) and cyclic prefix (CP) add blocks 676.

For example, the memory 671-1 or 671-2 may indicate memory including information for precoding. For example, the information for precoding may include a plurality of precoding matrices. The plurality of precoding matrices may be referred to as a codebook. The memory 671-1 or 671-2 may include a plurality of codebooks. For example, the precoding matrix may include PMI, a bit string indicating a location (or address) of a row of the precoding matrix and a location (or address) of a column of the precoding matrix, and a precoding weight indicating a value of an element of the precoding matrix corresponding to the location of the row and the location of the column. In other words, the precoding matrix may include a plurality of bit strings and a plurality of precoding weights. For example, a 4x4 precoding matrix may include 16 bit strings and 16 weights. For example, a 8x8 precoding matrix may include 64 bit strings and 64 weights. For example, the memory 671-1 or 671-2 may be included in the memory 370 of FIG. 3. For example, the memory 671-1 or 671-2 may be included in a component different from the baseband signal processing block 670-1 or 670-2 or may be included in the RU 220 independently.

For example, the memory 671-1 may be associated with a first set of MIMO layers among a plurality of MIMO layers included in the RU 220. For example, the first set of MIMO layers may indicate MIMO layers corresponding to antenna elements 693 and a plurality of IFFT&CP add blocks 674. For example, the first set of MIMO layers may include four MIMO layers. For example, the memory 671-2 may be associated with a second set of MIMO layers different from the first set of MIMO layers among a plurality of MIMO layers included in the RU 220. The second set of MIMO layers may indicate MIMO layers corresponding to antenna elements 695 and a plurality of IFFT&CP add blocks 676. The second set of MIMO layers may include four MIMO layers.

For example, the buffer 672-1 may align the data (or input signal) obtained from the fronthaul 660 for each MIMO layer. For example, the buffer 672-1 may align the data obtained from the fronthaul 660 for each layer within the first set of MIMO layers. For example, the buffer 672-2 may align the data obtained from the fronthaul 660 for each layer within the second set of MIMO layers.

For example, the precoding block 673-1 may perform precoding on data (or input signal) aligned for each layer within the first set of MIMO layers. For example, the precoding block 673-1 may use a 4x4 precoding matrix to perform precoding on the data aligned with the first layers including four MIMO layers. For example, the 4x4 precoding matrix may be a precoding matrix obtained from the memory 671-1. For example, the precoding block 673-1 may use a precoding matrix corresponding to the number of layers identified based on the cell information for the first cell. For example, the precoding block 673-2 may perform precoding on data (or input signal) aligned for each layer within the second set of MIMO layers. For example, the precoding block 673-2 may use a 4x4 precoding matrix to perform precoding on the data aligned with the second set of MIMO layers including four MIMO layers. For example, the 4x4 precoding matrix may be a precoding matrix obtained from the memory 671-2. For example, the precoding block 673-2 may use a precoding matrix corresponding to the number of layers identified based on the cell information for the second cell.

For example, each of the plurality of IFFT&CP add blocks 674 may perform IFFT conversion on the data (or input signal) processed through the precoding block 673-1 and add CP. For example, the IFFT&CP add block 674-1 may perform IFFT conversion on the data (or input signal) for a specific MIMO layer among the first set of MIMO layers and add CP. For example, the specific MIMO layer may indicate a layer associated with the antenna element 693-1. As described above, a data processing flow may indicate a processing flow in a case of processing a downlink signal. For example, in a case of processing an uplink signal, each of the plurality of IFFT&CP add blocks 674 may remove CP and perform FFT conversion.

For example, each of the plurality of IFFT&CP add blocks 676 may perform IFFT conversion on the data (or input signal) processed through the precoding block 673-2 and add CP. For example, the IFFT&CP add block 676-1 may perform IFFT conversion for the data (or input signal) for a specific MIMO layer among the second set of MIMO layers and add CP. For example, the specific MIMO layer may indicate a layer associated with the antenna element 695-1. As described above, a data processing flow may indicate a processing flow in a case of processing a downlink signal. For example, in a case of processing an uplink signal, each of the plurality of IFFT&CP add blocks 676 may remove CP and perform FFT conversion.

For example, the number of baseband signal processing blocks included in the RU 220 may correspond to the number of cells supported by the RU 220 (or the base station 110). The RU 220 of FIG. 6B is an example of a situation in which the RU 220 of FIG. 5B supports the first cell 501 and the second cell 502, and the RU 220 may include a first baseband signal processing block 670-1 and a second baseband signal processing block 670-2.

For example, the digital front end 680 may perform mapping to a corresponding antenna element for each of data processed by the baseband signal processing blocks 670. In addition, the digital front end 680 may include a digital up converter (DUC) or a digital down converter (DDC). In a case of downlink (i.e., in a case of transmitting), the DUC may convert each of the data, which is a baseband signal, into a digital intermediate frequency (IF) signal. In a case of uplink (i.e., in a case of receiving), the DDC may convert the digital IF signals into a plurality of baseband signals. For example, the digital front end 680 may include a crest factor reduction (CFR) and a digital pre-distortion (DPD). The CFR may indicate a component for reducing a peak to average power ratio (PAPR) of a baseband signal. The DPD may indicate a component for outputting a linear signal by applying a predistortion with respect to the baseband signal processed by the CFR.

For example, RF analog circuits 690 may include components that convert and process a baseband signal (or IF signal) processed from the digital front ends 680 into an RF signal. For example, each of the RF analog circuits 690 may include a digital to analog converter (DAC), an analog to digital converter (ADC), a power amplifier, and antenna elements. For example, the RF analog circuit 690-1 may include antenna elements 693. The antenna elements 693 may include four antenna elements 693-1, 693-2, 693-3, and 693-4. For example, the RF analog circuit 690-2 may include antenna elements 695. The antenna elements 695 may include four antenna elements 695-1, 695-2, 695-3, and 695-4. However, the embodiment of the present disclosure is not limited thereto, and each of the RF analog circuits 690 may further include or may include fewer components in addition to the above-described components.

The RU 220 of FIG. 6B illustrates an RU architecture supporting two cells (e.g., the first cell 501 and the second cell 502). Accordingly, the RU 220 may obtain cell information for the first cell 501 and cell information for the second cell 502 from the DU.

In the example of FIG. 6B, the first baseband signal processing block 670-1 is illustrated to be associated with four MIMO layers, but the embodiment of the present disclosure is not limited thereto. For example, the first baseband signal processing block 670-1 may be associated with eight MIMO layers (i.e., all MIMO layers included in the RU 220). Accordingly, when the RU 220 supports one cell through 8T8R, the first baseband signal processing block 670-1 may provide a service for the one cell. In addition, the RU 220 including an architecture in which the first baseband signal processing block 670-1 is associated with eight MIMO layers may provide a service for two cells through 4T4R, respectively. For example, the RU 220 may provide a service for one cell (e.g., the second cell 502) by using the second baseband signal processing block 670-2 associated with four MIMO layers. In addition, the RU 220 may provide a service for one cell (e.g., the first cell 501) by using the first baseband signal processing block 670-1 associated with eight MIMO layers. In this case, the first baseband signal processing block 670-1 may operate to obtain only four input signals from the fronthaul 660, or to obtain eight input signals and then transmit only four outputs to the digital front end 680.

Referring to FIGS. 6A and 6B, in a case that the base station 110 or the RU 220 provides a service for at least one cell, the number of MIMO layers may be set for each cell. For example, in a case that the RU 220 supports one cell by using eight MIMO layers (i.e., 8T8R), memory of the RU 220 may store an 8x8 precoding matrix. Alternatively, in a case that the RU 220 supports one cell by using four MIMO layers (i.e., 4T4R), the memory of the RU 220 may store a 4x4 precoding matrix. As described above, as the number of cells supported by the RU 220 increases, the required number of memory and the capacity of the memory may increase. In addition, as the number of cells supported by the RU 220 increases, an image configured with different functions (or architectures) for each cell may be required. The image may indicate a compiled result of an FPGA including a processor. That is, since the operation of the processor of the RU 220 may be changed for each cell, a different image may be required for each cell. However, forming such a plurality of images may require a lot of resources.

In addition, in a case that the RU 220 supports one cell through 8T8R as illustrated in FIG. 6A, the RU 220 may include only one baseband signal processing block 620 for the one cell. The precoding block 623 of the baseband signal processing block 620 may perform processing of an input signal, by using an 8x8 precoding matrix stored in the memory 621. An output signal of the precoding block 623 may be defined as $\mathbf{A} \cdot \mathbf{d}_a$. The $\mathbf{A}$ may indicate an 8x8 precoding matrix, and the $\mathbf{d}_a$ may indicate an input signal with a form of an 8x1 vector. A relationship between the input signal and the output signal may be redefined as two input signals and two precoding matrices for 4T4R, as illustrated in the following equation.

[Equation 1]

$$\begin{bmatrix} \mathbf{B} & \mathbf{0} \\ \mathbf{0} & \mathbf{C} \end{bmatrix} \begin{bmatrix} \mathbf{d}_b \\ \mathbf{d}_c \end{bmatrix} = \begin{bmatrix} \mathbf{B} \cdot \mathbf{d}_b \\ \mathbf{C} \cdot \mathbf{d}_c \end{bmatrix}$$

The $\mathbf{B}$ may indicate a 4x4 precoding matrix for the first cell, the $\mathbf{0}$ may indicate a 4x4 zero matrix, the $\mathbf{C}$ may indicate a 4x4 precoding matrix for the second cell, the $\mathbf{d}_b$ may indicate an input signal for the first cell in a form of a 4x1 vector, and the $\mathbf{d}_c$ may indicate an input signal for the second cell in a form of a 4x1 vector. In other words, the $\mathbf{A}$ may be generated based on the $\mathbf{B}$, the $\mathbf{C}$, and the $\mathbf{0}$, and the $\mathbf{d}_a$ may be generated based on the $\mathbf{d}_b$ and the $\mathbf{d}_c$.

Referring to the above-described equation, an output signal for two cells using 4T4R may be generated by processing an input signal based on an 8x8 precoding matrix for supporting one cell using 8T8R. In other words, the RU 220 including 8T8R architecture for supporting one cell may support two cells. However, the RU 220 of FIG. 6A may include only one memory 621 associated with the precoding block 623. The memory 621 in the RU 220 may store only an 8×8 precoding matrix. Accordingly, when storing two 4×4 precoding matrices obtained from the processor 600 in memory, in a case that locations of the 4×4 precoding matrices for each cell in the 8×8 precoding matrix are not specified, the two 4×4 precoding matrices may be stored in the memory 621 in an overlapping state. In addition, since the cell information obtained by the RU 220 from the DU is obtained for each cell, information for different cells may not be considered. Accordingly, the RU 220 including the memory 621 that stores the 8x8 precoding matrix may not perform input signal processing based on two 4x4 precoding matrices. To solve the above problem, the RU 220 of FIG. 6B may include two baseband signal processing blocks 670-1 and 670-2 and two memories 671-1 and 671-2. However, such an architecture of the RU 220 is considered at the time of initial design, and if the RU 220 is required to support two cells after it is designed in the architecture of FIG. 6A, many resources may be required to change the architecture of the RU 220.

Therefore, the present disclosure proposes an electronic device and method for supporting one cell using an architecture to support a plurality of cells or for supporting a plurality of cells using an architecture to support one cell. The electronic device and method according to an embodiment of the present disclosure may substantially support a plurality of cells using an architecture to support one cell, by storing a high-dimension precoding matrix (e.g., 8x8) in one memory using low-dimension precoding matrices (e.g., 4x4) obtained from a processor. In addition, the electronic device and method according to an embodiment of the present disclosure may substantially support one cell using an architecture to support a plurality of cells, by storing low-dimension precoding matrices (e.g., 4x4) in a plurality of memories using a high-dimension precoding matrix (e.g., 8x8) obtained from the processor. Accordingly, the electronic device and method according to an embodiment of the present disclosure may reduce the amount of memory used and reduce power consumption. In addition, the electronic device and method according to an embodiment of the present disclosure may provide a service for various network environments without generating a separate image for driving the processor. In addition, the electronic device and method of the present disclosure may miniaturize the architecture of the RU 220.

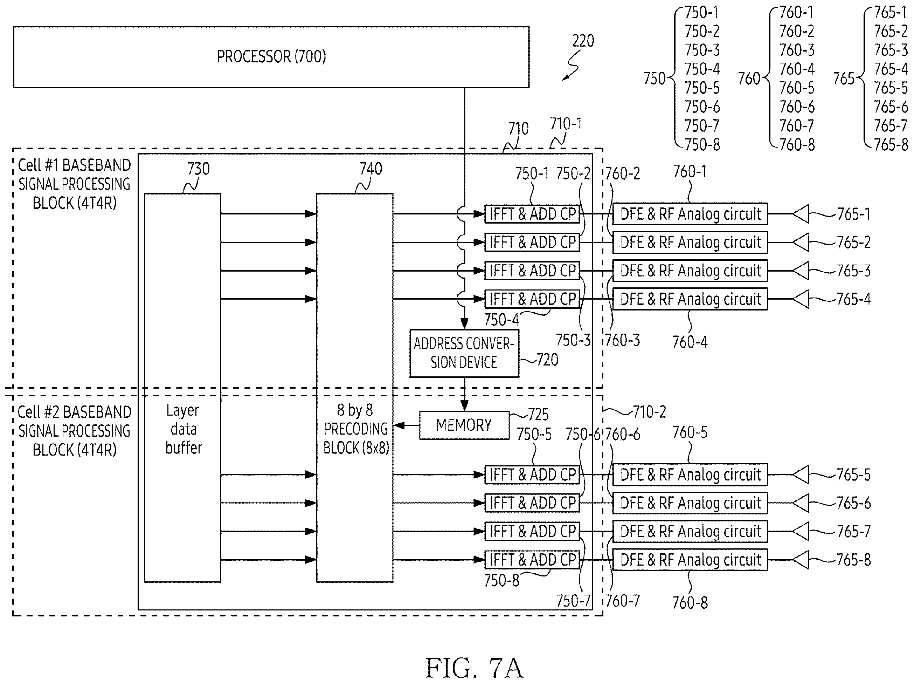

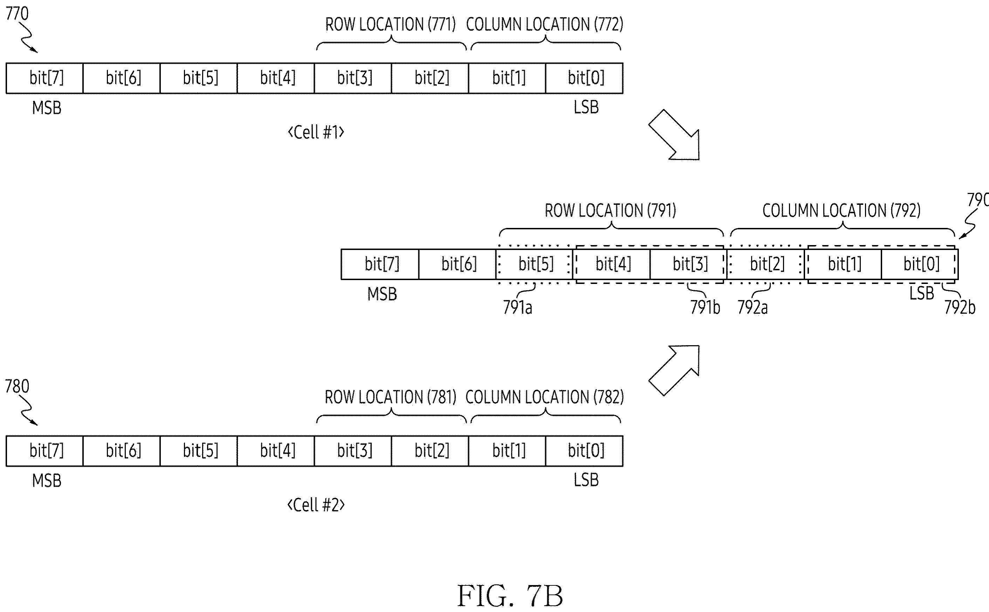

FIG. 7A illustrates an example of a method of supporting a plurality of cells by using an RU architecture for one cell. FIG. 7B illustrates an example of a bit string for an 8x8 precoding matrix identified based on bit strings for 4x4 precoding matrices.

The RU 220 of FIG. 7A may illustrate an example of the RU 220 of FIG. 2. For example, the RU 220 of FIG. 7A may be connected to a DU (not illustrated) (e.g., the DU 210 of FIG. 2) through a fronthaul (not illustrated). For example, the fronthaul may include the fronthaul transceiver 365 of FIG. 3B.

Referring to FIG. 7A, the RU 220 may include a processor 700, a baseband signal processing block 710, memory 725, a digital front end, and RF analog circuits 760. Although a fronthaul is not illustrated in FIG. 7A for convenience of explanation, the embodiment of the present disclosure is not limited thereto. For example, the RU 220 may further include or include fewer the components of FIG. 7A.

For example, the processor 700 may indicate a component to which an operating system (OS) and software have been uploaded. For example, the processor 700 may operate based on the OS and/or the software programming.

For example, the processor 700 may identify setting information based on data obtained by the fronthaul from the DU. For example, the processor 700 may obtain cell addition information (hereinafter, cell information) obtained from the DU. The cell information may be obtained for each cell. For example, in a case of providing a service for the first cell 501 like the RU 220 of FIG. 5A, the RU 220 may obtain cell information for the first cell 501. Alternatively, in a case of providing a service for the first cell 501 and the second cell 502 like the RU 220 of FIG. 5B, the RU 220 may obtain cell information for the first cell 501 and cell information for the second cell 502.

For example, the cell information may include at least one of the number of antenna elements of the RU 220 used to transmit and receive a signal on the first cell 501 and the second cell 502, an antenna port of the antenna element of the RU 220 used to transmit and receive the signal, the number of layers (or MIMO layers) associated with the antenna elements, an index for indicating a precoding matrix (e.g., a precoding matrix indicator (PMI)), or information indicating a type of a codebook including the precoding matrix.

For example, the number of the antenna elements may include four (4T4R) and eight (8T8R). However, the embodiment of the present disclosure is not limited thereto. The number of the antenna elements may be set to more than 8 or less than 4. For example, the antenna port may indicate antenna port information for the antenna element used to transmit and receive the signal. For example, in a case that only four antenna elements are used to transmit and receive a signal on the cell even when the RU 220 includes eight antenna elements, it may indicate antenna port information with respect to each of the four antenna elements. For example, a type of the codebook may include single user-MIMO (SU-MIMO) or multiple user-MIMO (MU-MIMO).

For example, the processor 700 may control a baseband signal processing block 710, a digital front end, and RF analog circuits 760, based on the identified setting information. For example, the processor 700 may store, in the memory 725, a plurality of precoding matrices for performing precoding, as described later. For example, the processor 700 may control the digital front-end and the RF analog circuits 760 to process a signal generated by applying a precoding matrix to an input signal.

For example, the RU 220 may obtain data from the DU by using the fronthaul. For example, the data may include parameter data for control and traffic data indicating information that is actually intended to be transmitted. For example, the data may include in-phase/quadrature (I/Q) data or an I/Q signal. The traffic data may be referred to as an input signal.

For example, the baseband signal processing block 710 may include components for processing the data obtained through the fronthaul. For example, the baseband signal processing block 710 may include a layer data buffer 730, a precoding block 740, and a plurality of inverse fast Fourier transform (IFFT) and cyclic prefix (CP) add blocks 750. For example, the baseband signal processing block 710 may be connected to the memory 725 that stores $8 \times 8$ precoding matrices. For example, the baseband signal processing block 710 may include a buffer 730 for aligning data for eight MIMO layers. For example, the baseband signal processing block 710 may include eight a plurality of IFFT&CP add blocks 750-1, 750-2, 750-3, 750-4, 750-5, 750-6, 750-7, and 750-8. For example, the plurality of IFFT&CT add blocks 750-1, 750-2, 750-3, 750-4, 750-5, 750-6, 750-7, and 750-8 may correspond to a digital front-end and RF analog circuits 760-1, 760-2, 760-3, 760-4, 760-5, 760-6, 760-7, and 760-8.

For example, the memory 725 may indicate memory including information for precoding. For example, the information for precoding may include a plurality of precoding matrices. The plurality of precoding matrices may be referred to as a codebook. The memory 725 may include a plurality of codebooks. For example, the precoding matrix may include PMI, a bit string indicating a location (or address) of a row of the precoding matrix and a location (or address) of a column of the precoding matrix, and a precoding weight indicating a value of an element of the precoding matrix corresponding to the location of the row and the location of the column. In other words, the precoding matrix may include a plurality of bit strings and a plurality of precoding weights. For example, the 8x8 precoding matrix may include 64 bit strings and 64 weights. For example, the memory 725 may be included in the memory 370 of FIG. 3.

For example, the buffer 730 may align the data (or input signal) obtained from the fronthaul for each layer. The layer may be referred to as a MIMO layer. In the example of FIG. 7A, the RU 220 including eight antenna elements 765-1, 765-2, 765-3, 765-4, 765-5, 765-6, 765-7, and 765-8 may include eight MIMO layers. In other words, in the present disclosure for convenience of explanation, one MIMO layer may be defined as being associated with one antenna element.

For example, the precoding block 740 may perform precoding on data (or input signal) aligned for each layer. For example, the precoding block 740 may use an 8x8 precoding matrix in order to perform precoding on the data aligned with eight MIMO layers. For example, the 8x8 precoding matrix may be a precoding matrix obtained from the memory 725. For example, the precoding block 740 may use a precoding matrix corresponding to the number of layers identified based on the cell information.

For example, each of a plurality of IFFT&CP add blocks 750 may perform IFFT conversion on the data (or input signal) processed through the precoding block 740 and add CP. For example, the IFFT&CP add block 750-1 may perform IFFT conversion on the data (or input signal) for a specific MIMO layer and add a CP. For example, the specific MIMO layer may indicate a layer associated with the antenna element 765-1. As described above, a data processing flow may indicate a processing flow in a case of processing a downlink signal. For example, in a case of processing an uplink signal, each of the plurality of IFFT&CP add blocks 750 may remove CP and perform FFT conversion.

For example, among the digital front end and RF analog circuits 760, the digital front end may perform mapping to a corresponding antenna element for each of data processed by the baseband signal processing blocks 740. In addition, the digital front end may include a digital up converter (DUC) or a digital down converter (DDC). In a case of downlink (i.e., in a case of transmitting), the DUC may convert each of the data, which is a baseband signal, into a digital intermediate frequency (IF) signal. In a case of uplink (i.e., in a case of receiving), the DDC may convert the digital IF signals into a plurality of baseband signals. For example, the digital front end 680 may include a crest factor reduction (CFR) and a digital pre-distortion (DPD). The CFR may indicate a component for reducing a peak to average power ratio (PAPR) of a baseband signal. The DPD may indicate a component for outputting a linear signal by applying a predistortion with respect to the baseband signal processed by the CFR.

For example, the RF analog circuits may include components that convert and process a baseband signal (or IF signal) processed from the digital front ends into an RF signal. For example, each of the RF analog circuits may include a digital to analog converter (DAC), an analog to digital converter (ADC), a power amplifier, and an antenna element. However, the embodiment of the present disclosure is not limited thereto, and each of the RF analog circuits may further include or may include fewer components in addition to the above-described components.

Referring to FIG. 7A, the RU 220 may include an address conversion device 720. For example, the address conversion device 720 may indicate a component for storing a precoding matrix of a high dimension (e.g., 8x8) in the memory 725 based on precoding matrices of a low dimension (e.g., 4x4). Although FIG. 7A illustrates the RU 220 including the address conversion device 720 which is a separate component, the embodiment of the present disclosure is not limited thereto. For example, the address conversion device 720 may be included in the processor 700. Alternatively, functions performed by the address conversion device 720 may be performed by the operation of the processor 700. For example, the address conversion device 720 may generate a plurality of bit strings for generating a precoding matrix of a high-dimension by setting an address to be stored in the memory 725 with respect to a plurality of bit strings for generating a precoding matrix of a low-dimension. For description of the operation of the address conversion device 720 (or the processor 700), an example of FIG. 7B may be referred to.

Referring to FIG. 7B, a bit string 770 may indicate a bit string for a 4×4 precoding matrix. For example, the bit string 770 may indicate a bit string having a size (or length) of 8 bits. However, the embodiment of the present disclosure is not limited thereto. For example, the bit string 770 may include a bit string having a size greater than or less than 8 bits.

For example, the bit string 770 may indicate a bit string for generating the 4x4 precoding matrix for a first set of MIMO layers for a first cell. For example, an element corresponding to a location in the 4x4 precoding matrix identified based on the bit string 770 may have a value of a precoding weight associated with the bit string 770. For example, the location may be identified based on a first portion 771 and a second portion 772 of the bit string 770. For example, the first portion 771 may include bits for indicating a location of a row of the 4x4 precoding matrix. For example, the second portion 772 may include bits for indicating a location of a column of the 4x4 precoding matrix. Since the 4x4 precoding matrix includes four rows and four columns, each of the first portion 771 and the second portion 772 may include two bits. For example, when the first portion 771 is '00' and the second portion 772 is '11', the location may indicate an element corresponding to the fourth column of the first row. In this case, the precoding weight associated with the bit string 770 may indicate a value of the element. The 4×4 precoding matrix may be formed based on 16 bit strings and 16 precoding weights. The 16 bit strings and 16 precoding weights may be exemplified as illustrated in the following table.

[Table 1]

| Bit string | Precoding weight |
|---|---|
| 0000_00_00 | $W_{0,0}$ |
| 0000_00_01 | $W_{0,1}$ |
| 0000_00_10 | $W_{0,2}$ |
| 0000_00_11 | $W_{0,3}$ |

(continued)

| Bit string | Precoding weight |
|---|---|
| 0000_01_00 | $W_{1,0}$ |
| 0000_01_01 | $W_{1,1}$ |
| 0000_01_10 | $W_{1,2}$ |
| 0000_01_11 | $W_{1,3}$ |
| 0000_10_00 | $W_{2,0}$ |
| 0000_10_01 | W2,1 |
| 0000_10_10 | W2,2 |
| 0000_10_11 | W2,3 |
| 0000_11_00 | $W_{3,0}$ |
| 0000_11_00 | $W_{3,1}$ |
| 0000_11_00 | $W_{3,2}$ |
| 0000_11_00 | $W_{3,3}$ |

The first and second bits from the right (LSB) of the bit string (i.e., the second portion 772) may indicate a location of column of the precoding matrix. The third and fourth bits from the right (LSB) of the bit string (i.e., the first portion 771) may indicate a location of row of the precoding matrix. Each of the bit strings may be associated with a precoding weight. The precoding weight ($W_{x, y}$) may indicate a weight value of a y-column of an x-row. For example, $W_{2,1}$ may indicate a weight value of a second column of a third row. The 4x4 precoding matrix generated based on the above table is illustrated in the following equation.

[Equation 2]

$$\begin{bmatrix} W_{0,0} & W_{0,1} & W_{0,2} & W_{0,3} \\ W_{1,0} & W_{1,1} & W_{1,2} & W_{1,3} \\ W_{2,0} & W_{2,1} & W_{2,2} & W_{2,3} \\ W_{3,0} & W_{3,1} & W_{3,2} & W_{3,3} \end{bmatrix}$$

Based on a first input signal for the first cell, a first output signal to which the precoding matrix of the above equation is applied may be calculated based on the following equation.

[Equation 3]

$$\begin{bmatrix} W_{0,0} & W_{0,1} & W_{0,2} & W_{0,3} \\ W_{1,0} & W_{1,1} & W_{1,2} & W_{1,3} \\ W_{2,0} & W_{2,1} & W_{2,2} & W_{2,3} \\ W_{3,0} & W_{3,1} & W_{3,2} & W_{3,3} \end{bmatrix} \begin{bmatrix} d_{a0} \\ d_{a1} \\ d_{a2} \\ d_{a3} \end{bmatrix}$$

The $d_{a0}$ may indicate input data on a first MIMO layer for the first cell, the $d_{a1}$ may indicate input data on a second MIMO layer for the first cell, the $d_{a2}$ may indicate input data on a third MIMO layer for the first cell, and the $d_{a3}$ may indicate input data on a fourth MIMO layer for the first cell. The first MIMO layer, the second MIMO layer, the third MIMO layer, and the fourth MIMO layer may be included in the first set of MIMO layers. The $d_{a0}$, $d_{a1}$, $d_{a2}$, and $d_{a3}$ may be included in the first input signal. Referring to the above-described equation, the first output signal (e.g., a portion of the output signal of the precoding block 740 of FIG. 7A) may be outputted by applying a $4\times4$ precoding matrix to the first input signal for the first cell. The first output signal may be inputted to IFFT&CP add blocks (e.g., IFFT&CP add blocks 750-1, 750-2, 750-3, and 750-4 of FIG. 7A) of corresponding MIMO layers.

For example, similar to the bit string 770, a bit string 780 may indicate a bit string for a 4x4 precoding matrix. For example, the bit string 780 may indicate a bit string having a size (or length) of 8 bits. However, the embodiment of the present disclosure is not limited thereto. For example, the bit string 770 may include a bit string having a size greater than or less than 8 bits.

For example, the bit string 780 may indicate a bit string for generating the 4x4 precoding matrix for a second set of MIMO layers for a second cell. For example, an element corresponding to a location in the precoding matrix identified based on the bit string 780 may have a value of a precoding weight associated with the bit string 780. For example, the location may be identified based on a first portion 781 and a second portion 782 of the bit string 780. For example, the first portion 781 may include bits for indicating a location of a row of the 4x4 precoding matrix. For example, the second portion 772 may include bits for indicating a location of a column of the 4x4 precoding matrix.

A relationship between bit strings for the 4x4 precoding matrix for the second cell and precoding weights may be exemplified as in Table 1. In addition, an example of the 4x4 precoding matrix may be exemplified as in Equation 2.

Based on a second input signal for the second cell, a second output signal to which the precoding matrix is applied may be calculated based on the following equation.

[Equation 4]

$$\begin{bmatrix} w_{0,0} & w_{0,1} & w_{0,2} & w_{0,3} \\ w_{1,0} & w_{1,1} & w_{1,2} & w_{1,3} \\ w_{2,0} & w_{2,1} & w_{2,2} & w_{2,3} \\ w_{3,0} & w_{3,1} & w_{3,2} & w_{3,3} \end{bmatrix} \begin{bmatrix} d_{b0} \\ d_{b1} \\ d_{b2} \\ d_{b3} \end{bmatrix}$$

The $d_{b0}$ may indicate input data on a fifth MIMO layer for the second cell, the $d_{b1}$ may indicate input data on a sixth MIMO layer for the second cell, the $d_{b2}$ may indicate input data on a seventh MIMO layer for the second cell, and the $d_{b3}$ may indicate input data on an eighth MIMO layer for the second cell. The fifth MIMO layer, the sixth MIMO layer, the seventh MIMO layer, and the eighth MIMO layer may be included in the second set of MIMO layers. The $d_{b0}$, $d_{b1}$, $d_{b2}$, and $d_{b3}$ may be included in the second input signal. Referring to the above-described equation, the second output signal (e.g., another portion of the output signal of the precoding block 740 of FIG. 7A) may be outputted by applying a $4 \times 4$ precoding matrix to the second input signal for the second cell. The second output signal may be inputted to IFFT&CP add blocks (e.g., IFFT&CP add blocks 750-5, 750-6, 750-7, and 750-8 of FIG. 7A) of corresponding MIMO layers.

Referring to the above description, based on the 4x4 precoding matrix generated based on the bit string 770 or the bit string 780, the RU 220 may provide a service to one cell using four antenna elements. Referring to Equation 1, an 8x8 precoding matrix in which the **B** and **C** are replaced with the 4x4 precoding matrices generated by the bit string 770 and the bit string 780 may be generated. In a case of processing an input signal based on the 8x8 precoding matrix, the RU 220 may provide a service to substantially two cells even when one baseband signal processing block (e.g., the baseband signal processing block 710 of FIG. 7A) is used.

Referring to FIG. 7B, a bit string 790 may indicate a bit string for an 8x8 precoding matrix. For example, the bit string 790 may indicate a bit string having a size (or length) of 8 bits. However, the embodiment of the present disclosure is not limited thereto. For example, the bit string 790 may include a bit string having a size greater than or less than 8 bits.

For example, the bit string 790 may indicate a bit string for generating the 8x8 precoding matrix for a plurality of MIMO layers. The plurality of MIMO layers may indicate layers for providing a service for one cell. For example, the plurality of MIMO layers may indicate all MIMO layers included in the RU 220 of FIG. 7A. For example, an element corresponding to a location in the 8x8 precoding matrix identified based on the bit string 790 may have a value of a precoding weight associated with the bit string 790. For example, the location may be identified based on a first portion 791 and a second portion 792 of the bit string 790. For example, the first portion 791 may include bits for indicating a location of a row of the precoding matrix. For example, the second portion 792 may include bits for indicating a location of a column of the precoding matrix. Since the 8x8 precoding matrix includes 8 rows and 8 columns, each of the first portion 791 and the second portion 792 may include 3 bits. For example, when the first portion 791 is '001' and the second portion 792 is '111, the location may indicate an element corresponding to the eighth column of the second row. In this case, the precoding weight associated with the bit string 790 may indicate a value of the element. The 8x8 precoding matrix may be formed based on 64 bit strings and 64 precoding weights. The 64 bit strings and 64 precoding weights may be exemplified as illustrated in the following table.

[Table 2]

| Bit string | Precoding weight | Bit string | Precoding weight |
|---|---|---|---|
| 00_000_000 | $W_{0,0}$ | 00_100_000 | $W_{4,0}$ |
| 00_000_001 | $W_{0,1}$ | 00_100_001 | $W_{4,1}$ |
| 00_000_010 | $W_{0,2}$ | 00_100_010 | $W_{4,2}$ |
| 00_000_011 | $W_{0,3}$ | 00_100_011 | $W_{4,3}$ |
| 00_000_100 | $W_{0,4}$ | 00_100_100 | $W_{4,4}$ |
| 00_000_101 | $W_{0,5}$ | 00_100_101 | $W_{4,5}$ |
| 00_000_110 | $W_{0,6}$ | 00_100_110 | $W_{4,6}$ |
| 00_000_111 | $W_{0,7}$ | 00_100_111 | $W_{4,7}$ |
| 00_001_000 | $W_{1,0}$ | 00_101_000 | $W_{5,0}$ |
| 00_001_001 | $W_{1,1}$ | 00_101_001 | $W_{5,1}$ |
| 00_001_010 | $W_{1,2}$ | 00_101_010 | $W_{5,2}$ |
| 00_001_011 | $W_{1,3}$ | 00_101_011 | $W_{5,3}$ |
| 00_001_100 | $W_{1,4}$ | 00_101_100 | $W_{5,4}$ |
| 00_001_101 | $W_{1,5}$ | 00_101_101 | $W_{5,5}$ |
| 00_001_110 | $W_{1,6}$ | 00_101_110 | $W_{5,6}$ |
| 00_001_111 | $W_{1,7}$ | 00_101_111 | $W_{5,7}$ |
| 00_010_000 | $W_{2,0}$ | 00_110_000 | $W_{6,0}$ |
| 00_010_001 | $W_{2,1}$ | 00_110_001 | $W_{6,1}$ |
| 00_010_010 | $W_{2,2}$ | 00_110_010 | $W_{6,2}$ |
| 00_010_011 | $W_{2,3}$ | 00_110_011 | $W_{6,3}$ |
| 00_010_100 | $W_{2,4}$ | 00_110_100 | $W_{6,4}$ |
| 00_010_101 | $W_{2,5}$ | 00_110_101 | $W_{6,5}$ |
| 00_010_110 | $W_{2,6}$ | 00_110_110 | $W_{6,6}$ |
| 00_010_111 | $W_{2,7}$ | 00_110_111 | $W_{6,7}$ |
| 00_011_000 | $W_{3,0}$ | 00_111_000 | $W_{7,0}$ |
| 00_011_001 | $W_{3,1}$ | 00_111_001 | $W_{7,1}$ |
| 00_011_010 | $W_{3,2}$ | 00_111_010 | $W_{7,2}$ |
| 00_011_011 | $W_{3,3}$ | 00_111_011 | $W_{7,3}$ |
| 00_011_100 | $W_{3,4}$ | 00_111_100 | $W_{7,4}$ |
| 00_011_101 | $W_{3,5}$ | 00_111_101 | $W_{7,5}$ |
| 00_011_110 | $W_{3,6}$ | 00_111_110 | $W_{7,6}$ |
| 00_011_111 | $W_{3,7}$ | 00_111_111 | $W_{7,7}$ |

Referring to the above table, the first to third bits from the right (LSB) of the bit string (i.e., the second portion 792) may indicate a location of column of an $8\times8$ precoding matrix. The fourth to sixth bits from the right (LSB) of the bit string (i.e., the first portion 791) may indicate a location of row of the $8\times8$ precoding matrix. Each of the bit strings may be associated with a precoding weight. The precoding weight ($W_{x,y}$) may indicate a weight value of a y-column of an x-row. For example, $W_{2,1}$ may indicate a weight of a second column of a third row. The 8x8 precoding matrix generated based on the above table is illustrated in the following equation.

[Equation 5]

$$\begin{bmatrix} w_{0,0} & w_{0,1} & w_{0,2} & w_{0,3} & w_{0,4} & w_{0,5} & w_{0,6} & w_{0,7} \\ w_{1,0} & w_{1,1} & w_{1,2} & w_{1,3} & w_{1,4} & w_{1,5} & w_{1,6} & w_{1,7} \\ w_{2,0} & w_{2,1} & w_{2,2} & w_{2,3} & w_{2,4} & w_{2,5} & w_{2,6} & w_{2,7} \\ w_{3,0} & w_{3,1} & w_{3,2} & w_{3,3} & w_{3,4} & w_{3,5} & w_{3,6} & w_{3,7} \\ w_{4,0} & w_{4,1} & w_{4,2} & w_{4,3} & w_{4,4} & w_{4,5} & w_{4,6} & w_{4,7} \\ w_{5,0} & w_{5,1} & w_{5,2} & w_{5,3} & w_{5,4} & w_{5,5} & w_{5,6} & w_{5,7} \\ w_{6,0} & w_{6,1} & w_{6,2} & w_{6,3} & w_{6,4} & w_{6,5} & w_{6,6} & w_{6,7} \\ w_{7,0} & w_{7,1} & w_{7,2} & w_{7,3} & w_{7,4} & w_{7,5} & w_{7,6} & w_{7,7} \end{bmatrix}$$

Based on an input signal for the one cell, an output signal to which the precoding matrix of the above equation is applied may be calculated based on the following equation.

[Equation 6]

$$\begin{bmatrix} w_{0,0} & w_{0,1} & w_{0,2} & w_{0,3} & w_{0,4} & w_{0,5} & w_{0,6} & w_{0,7} \\ w_{1,0} & w_{1,1} & w_{1,2} & w_{1,3} & w_{1,4} & w_{1,5} & w_{1,6} & w_{1,7} \\ w_{2,0} & w_{2,1} & w_{2,2} & w_{2,3} & w_{2,4} & w_{2,5} & w_{2,6} & w_{2,7} \\ w_{3,0} & w_{3,1} & w_{3,2} & w_{3,3} & w_{3,4} & w_{3,5} & w_{3,6} & w_{3,7} \\ w_{4,0} & w_{4,1} & w_{4,2} & w_{4,3} & w_{4,4} & w_{4,5} & w_{4,6} & w_{4,7} \\ w_{5,0} & w_{5,1} & w_{5,2} & w_{5,3} & w_{5,4} & w_{5,5} & w_{5,6} & w_{5,7} \\ w_{6,0} & w_{6,1} & w_{6,2} & w_{6,3} & w_{6,4} & w_{6,5} & w_{6,6} & w_{6,7} \\ w_{7,0} & w_{7,1} & w_{7,2} & w_{7,3} & w_{7,4} & w_{7,5} & w_{7,6} & w_{7,7} \end{bmatrix} \begin{bmatrix} d_0 \\ d_1 \\ d_2 \\ d_3 \\ d_4 \\ d_5 \\ d_6 \\ d_7 \end{bmatrix}$$

The $d_0$ may indicate input data on a first MIMO layer for the one cell, the $d_1$ may indicate input data on a second MIMO layer for the one cell, the $d_2$ may indicate input data on a third MIMO layer for the one cell, and the $d_3$ may indicate input data on a fourth MIMO layer for the one cell. The $d_4$ may indicate input data on a fifth MIMO layer for the one cell, the $d_5$ may indicate input data on a sixth MIMO layer for the one cell, the $d_6$ may indicate input data on a seventh MIMO layer for the one cell, and the $d_7$ may indicate input data on an eighth MIMO layer for the one cell. The first MIMO layer to the eighth MIMO layer may be included in the plurality of MIMO layers. For example, the plurality of MIMO layers may include the first set of MIMO layers and the second set of MIMO layers.

The $d_0$ to $d_7$ may be included in the input signal. Referring to the above-described equation, the output signal (e.g., the entire output signal of the precoding block 740 of FIG. 7A) may be outputted by applying a precoding matrix to the input signal for the one cell. The output signal may be inputted to IFFT&CP add blocks (e.g., the IFFT&CP add blocks 750 of FIG. 7A) of the plurality of MIMO layers.

Referring to FIG. 7B, the RU 220 may support one cell through one baseband signal processing block (e.g., the baseband signal processing block 710 of FIG. 7A) using an 8x8 precoding matrix generated based on bit string 790. When the 8x8 precoding matrix generated in the bit string 790 is a block diagonal matrix as shown in Equation 1, the RU 220 may substantially provide a service to two cells even using one 8x8 precoding matrix. For example, one 8x8 precoding matrix used to provide a service to two cells is illustrated in the following equation.

[Equation 7]

$$\begin{bmatrix} w_{0,0} & w_{0,1} & w_{0,2} & w_{0,3} & 0 & 0 & 0 & 0 \\ w_{1,0} & w_{1,1} & w_{1,2} & w_{1,3} & 0 & 0 & 0 & 0 \\ w_{2,0} & w_{2,1} & w_{2,2} & w_{2,3} & 0 & 0 & 0 & 0 \\ w_{3,0} & w_{3,1} & w_{3,2} & w_{3,3} & 0 & 0 & 0 & 0 \\ 0 & 0 & 0 & 0 & w_{0,0} & w_{0,1} & w_{0,2} & w_{0,3} \\ 0 & 0 & 0 & 0 & w_{1,0} & w_{1,1} & w_{1,2} & w_{1,3} \\ 0 & 0 & 0 & 0 & w_{2,0} & w_{2,1} & w_{2,2} & w_{2,3} \\ 0 & 0 & 0 & 0 & w_{3,0} & w_{3,1} & w_{3,2} & w_{3,3} \end{bmatrix}$$

The 4×4 precoding matrix at the upper left of the 8×8 precoding matrix may indicate a precoding matrix for the first cell of Equation 2, and the 4×4 precoding matrix at the lower right of the 8×8 precoding matrix may indicate a precoding matrix for the second cell in the left-term of Equation 4.

Based on the first input signal for the first cell and the second input signal for the second cell, the output signal to which the precoding matrix of Equation 7 is applied may be calculated based on the following Equation.

[Equation 8]

$$\begin{bmatrix} w_{0,0} & w_{0,1} & w_{0,2} & w_{0,3} & 0 & 0 & 0 & 0 \\ w_{1,0} & w_{1,1} & w_{1,2} & w_{1,3} & 0 & 0 & 0 & 0 \\ w_{2,0} & w_{2,1} & w_{2,2} & w_{2,3} & 0 & 0 & 0 & 0 \\ w_{3,0} & w_{3,1} & w_{3,2} & w_{3,3} & 0 & 0 & 0 & 0 \\ 0 & 0 & 0 & 0 & w_{0,0} & w_{0,1} & w_{0,2} & w_{0,3} \\ 0 & 0 & 0 & 0 & w_{1,0} & w_{1,1} & w_{1,2} & w_{1,3} \\ 0 & 0 & 0 & 0 & w_{2,0} & w_{2,1} & w_{2,2} & w_{2,3} \\ 0 & 0 & 0 & 0 & w_{3,0} & w_{3,1} & w_{3,2} & w_{3,3} \end{bmatrix} \begin{bmatrix} d_{a0} \\ d_{a1} \\ d_{a2} \\ d_{a3} \\ d_{b0} \\ d_{b1} \\ d_{b2} \\ d_{b3} \end{bmatrix}$$

The 64 bit strings and 64 precoding weights for generating the 8x8 precoding matrix of Equation 8 may be exemplified as illustrated in the following table.

[Table 3]

| Bit string | Precoding weight | Bit string | Precoding weight |
|---|---|---|---|
| 00_000_000 | $W_{0,0}$ | 00_100_000 | 0 |
| 00_000_001 | $W_{0,1}$ | 00_100_001 | 0 |
| 00_000_010 | $W_{0,2}$ | 00_100_010 | 0 |
| 00_000_011 | $W_{0,3}$ | 00_100_011 | 0 |
| 00_000_100 | 0 | 00_100_100 | $W_{0,0}$ |
| 00_000_101 | 0 | 00_100_101 | $W_{0,1}$ |
| 00_000_110 | 0 | 00_100_110 | $W_{0,2}$ |
| 00_000_111 | 0 | 00_100_111 | $W_{0,3}$ |
| 00_001_000 | $W_{1,0}$ | 00_101_000 | 0 |
| 00_001_001 | $W_{1,1}$ | 00_101_001 | 0 |
| 00_001 010 | $W_{1,2}$ | 00 101 010 | 0 |

(continued)

| Bit string | Precoding weight | Bit string | Precoding weight |
|---|---|---|---|
| 00_001_011 | $W_{1,3}$ | 00_101_011 | 0 |
| 00_001 100 | 0 | 00 101 100 | $W_{1,0}$ |
| 00_001_101 | 0 | 00_101_101 | $W_{1,1}$ |
| 00_001_110 | 0 | 00_101_110 | $W_{1,2}$ |
| 00_001_111 | 0 | 00_101_111 | $W_{1,3}$ |
| 00_010_000 | $W_{2,0}$ | 00_110_000 | 0 |
| 00_010_001 | $W_{2,1}$ | 00_110_001 | 0 |
| 00_010_010 | $W_{2,2}$ | 00_110_010 | 0 |
| 00_010_011 | $W_{2,3}$ | 00_110_011 | 0 |
| 00_010_100 | 0 | 00_110_100 | $W_{2,0}$ |
| 00_010_101 | 0 | 00_110_101 | $W_{2,1}$ |
| 00_010_110 | 0 | 00_110_110 | $W_{2,2}$ |
| 00_010_111 | 0 | 00_110_111 | $W_{2,3}$ |
| 00_011_000 | $W_{3,0}$ | 00_111_000 | 0 |
| 00_011_001 | $W_{3,1}$ | 00_111_001 | 0 |
| 00_011_010 | $W_{3,2}$ | 00_111_010 | 0 |
| 00_011_011 | $W_{3,3}$ | 00_111_011 | 0 |
| 00_011_100 | 0 | 00_111_100 | $W_{3,0}$ |
| 00_011_101 | 0 | 00_111_101 | $W_{3,1}$ |
| 00_011_110 | 0 | 00_111_110 | $W_{3,2}$ |
| 00_011_111 | 0 | 00_111_111 | $W_{3,3}$ |

Referring to Equation 8 described above, when the 8x8 precoding matrix generated based on the bit string 770 and the bit string 780 is configured with a block diagonal matrix as illustrated in Equation 8 above, the RU 220 may provide substantially a service to two cells even using one 8x8 precoding matrix.

For example, the processor 700 (or the address conversion device 720) of the RU 220 may convert a bit string (e.g., the bit string 770 or the bit string 780) for a 4x4 precoding matrix into a bit string (e.g., the bit string 790) for an 8x8 precoding matrix, based on a location of the 4x4 precoding matrix within the 8x8 precoding matrix. For example, a 4x4 precoding matrix generated based on the bit string 770 for the first cell may be located at the upper left in the 8x8 precoding matrix. For example, a 4x4 precoding matrix generated based on the bit string 780 for the second cell may be located at the lower right in the 8x8 precoding matrix. In this case, a location of the upper left may be identified based on a first bit 791a of a first portion 791 and a second bit 792a of a second portion 792, which are included in the bit string 790 for the 8x8 precoding matrix. For example, when values of the first bit 791a and the second bit 792a are each 0, a 4x4 precoding matrix for the first cell may be located at the upper left of the 8x8 precoding matrix. In addition, for example, when values of the first bit 791a and the second bit 792a are each 1, a 4x4 precoding matrix for the second cell may be located at the lower right of the 8x8 precoding matrix.

For example, when the bit string 770 is converted to the bit string 790 for storage in the memory 725, a first portion 771 of the bit string 770 may be located at first bits 791b in the first portion 791 of the bit string 790, and a second portion 772 of the bit string 770 may be located at second bits 792b in the second portion 792 of the bit string 790. Since the bit string 770 is a bit string for the first cell, the first bit 791a and the second bit 792a may be set to 0. In this case, the first bit 791a and the second bit 792a, which are set to 0, may be referred to as first address information.

In addition, when the bit string 780 is converted to the bit string 790 for storage in the memory 725, a first portion 781 of the bit string 780 may be located at first bits 791b in the first portion 791 of the bit string 790, and a second portion 782 of the bit string 780 may be located at second bits 792b in the second portion 792 of the bit string 790. Since the bit string 780 is a bit string for the second cell, the first bit 791a and the second bit 792a may be set to 1. In this case, the first bit 791a and the second bit 792a, which are set to 1, may be referred to as second address information.

When the first address information and the second address information are not considered, information on the bit string 770 and the bit string 780 may be stored to be overlapped to each other (or redundant) in converting to the bit string 790. Alternatively, in the electronic device and method according to an embodiment of the present disclosure, it may not be overlapped (or redundant) by converting the bit string 770 and the bit string 780 into the bit string 790 based on the first address information and the second address information. Accordingly, the electronic device and method according to an embodiment of the present disclosure may provide a service to a plurality of cells by using one precoding matrix (i.e., one precoding block within one baseband signal processing block).

In FIG. 7B, examples of bit strings not considering PMI are illustrated for convenience of description, but the embodiment of the present disclosure is not limited thereto. For example, each of the bit string 770, the bit string 780, and the bit string 790 may include information indicating PMI. For example, PMI of the bit string 770 and PMI of the bit string 780 may correspond to each other. In addition, the PMI of the bit string 770 and the bit string 780 may be an index indicating a precoding matrix generated by the bit string 790. For example, the PMI of bit string 770 and the bit string 780 may correspond to the PMI included in the bit string 790.

Referring back to FIG. 7A, the address conversion device 720 may convert each of the bit strings 770 and 780 for the 4x4 precoding matrix obtained from the processor 700 into the bit string 790 for the 8x8 precoding matrix, as illustrated in the example of FIG. 7B. For example, the address conversion device 720 may insert (or replace) the first portion 771 of the bit string 770 into the first bits 791b of the bit string 790, and the second portion 772 of the bit string 770 into the second bits 792b of the bit string 790. In addition, the address conversion device 720 may set values of the first bit 791a and the second bit 792a of the bit string 790 to 0, based on identifying that the bit string 770 is associated with the first cell. Among the plurality of MIMO layers included in the RU 220, a first set of MIMO layers (e.g., the first MIMO layer to the fourth MIMO layer) may be MIMO layers for the first cell. For example, the first set of MIMO layers may be associated with antenna elements 765-1, 765-2, 765-3, and 765-4. In addition, for example, the address conversion device 720 may insert (or replace) the first portion 781 of the bit string 780 into the first bits 791b of the bit string 790, and insert the second portion 782 of the bit string 780 into the second bits 792b of the bit string 790.

For example, the address conversion device 720 may identify that the bit string 770 is associated with the first cell, based on the cell information for the first cell obtained from the DU (not illustrated). For example, the processor 700 may identify information for generating a precoding matrix for the first cell included in the cell information for the first cell. For example, the precoding matrix for the first cell may be a precoding matrix for the first set of MIMO layers. For example, the information may include bit strings including the bit string 770 and precoding weights corresponding to the bit strings. Accordingly, the processor 700 may identify that the bit string 770 included in the information is associated with the first cell. When transmitting the bit string 770 to the address conversion device 720, the processor 700 may indicate that the bit string 770 is associated with the first cell. Accordingly, the address conversion device 720 may identify that the bit string 770 is associated with the first cell.

For example, the address conversion device 720 may set values of the first bit 791a and the second bit 792a of the bit string 790 to 1, based on identifying that the bit string 780 is associated with the second cell. Among the plurality of MIMO layers included in the RU 220, a second set of MIMO layers (e.g., the fifth MIMO layer to the eighth MIMO layer) may be MIMO layers for the second cell. For example, the second set of MIMO layers may be associated with antenna elements 765-5, 765-6, 765-7, and 765-8.

For example, the address conversion device 720 may identify that the bit string 780 is associated with the second cell, based on the cell information for the second cell obtained from the DU (not illustrated). For example, the processor 700 may identify information for generating a precoding matrix for the second cell included in the cell information for the second cell. For example, the precoding matrix for the second cell may be a precoding matrix for the second set of MIMO layers. For example, the information may include bit strings including the bit string 780, and precoding weights corresponding to the bit strings. Accordingly, the processor 700 may identify that the bit string 780 included in the information is associated with the second cell. When transmitting the bit string 780 to the address conversion device 720, the processor 700 may indicate that the bit string 780 is associated with the second cell. Accordingly, the address conversion device 720 may identify that the bit string 780 is associated with the second cell.

In FIGS. 7A and 7B, it is described on the assumption that the address conversion device 720 exists as a component separate from the processor 700, but the embodiment of the present disclosure is not limited thereto. For example, the processor 700 may include the address conversion device 720 or may perform a function of the address conversion device 720.

Referring to FIG. 7A, the RU 220 may align, through a buffer 730, an input signal obtained from the DU by layer. The RU 220 may apply the 8x8 precoding matrix to data (or input signals) alinged with each layer, based on the precoding block 740 using the 8x8 precoding matrix. The 8x8 precoding matrix may be generated based on a bit string for the 8x8 precoding matrix converted from a bit string for the 4x4 precoding matrix. A portion of output signals of the precoding block 740 processed based on the 8x8 precoding matrix may be inputted to IFFT&CP add blocks 750-1, 750-2, 750-3, and 750-4 of the first set of MIMO layers, and another portion of the output signals may be inputted to IFFT&CP add blocks 750-5, 750-6, 750-7, and 750-8 of the second set of MIMO layers. The portion of output signals may be processed based on IFFT&CP add blocks 750-1, 750-2, 750-3, and 750-4 and a digital front-end and RF analog circuits 760-1, 760-2, 760-3, and 760-4. The RU 220 may transmit a first signal generated based on the portion of output signals on the first cell through antenna elements 765-1, 765-2, 765-3, and 765-4. The other portion of output signals may be processed based on IFFT&CP add blocks 750-5, 750-6, 750-7, and 750-8 and a digital front-end and RF analog circuits 760-5, 760-6, 760-7, and 760-8. The RU 220 may transmit a second signal generated based on the other portion of output signals on the second cell through antenna elements 765-5, 765-6, 765-7, and 765-8.

Referring to the above description, the RU 220 of FIG. 7A may provide a service for two cells (e.g., first cell and second cell) by using one baseband signal processing block 710 associated with a plurality of MIMO layers. For example, the RU 220 may transmit signals corresponding to input data processed through a precoding matrix (e.g., 8x8) for the plurality of MIMO layers from the memory 725 associated with the plurality of MIMO layers to the two cells. In other words, the RU 220 may support two cells substantially, even when one memory 725 and one baseband signal processing block 710 for supporting one cell are used.

In FIGS. 7A and 7B, an example of generating one 8x8 precoding matrix based on two 4x4 precoding matrices for supporting two cells is illustrated, but the embodiment of the present disclosure is not limited thereto. For example, the embodiment of the present disclosure may also be applied to a case of generating one 8x8 precoding matrix based on four 2x2 precoding matrices (i.e., a case of supporting a service for four cells through an 8x8 precoding matrix architecture for one cell). Alternatively, the embodiment of the present disclosure may also include cases of generating one 8x8 precoding matrix based on eight 1x1 precoding matrices, one 9x9 precoding matrix based on three 3x3 precoding matrices, and one 16x16 precoding matrix based on two 8x8 precoding matrices. Alternatively, the embodiment of the present disclosure may also include a case of generating one 8x8 precoding matrix based on two 2x2 precoding matrices, one 1x1 precoding matrix, and one 3x3 precoding matrix.

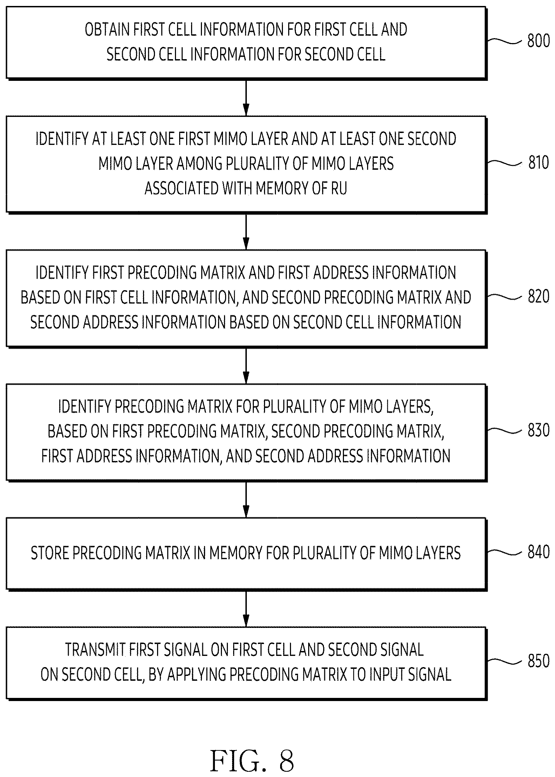

FIG. 8 illustrates an example of an operation flow supporting a plurality of cells through an RU architecture for one cell.

The RU architecture of FIG. 8 may indicate the RU 220 of FIG. 7A. The at least a portion of the operation flow of FIG. 8 may be performed by the RU 220 of FIG. 7A. For example, at least a portion of the operation flow of FIG. 8 may be performed by the processor 700.

Referring to FIG. 8, in operation 800, the RU 220 may obtain first cell information for a first cell and second cell information for a second cell. For example, the RU 220 may obtain the first cell information and the second cell information from a DU through a fronthaul (e.g., the fronthaul transceiver 365 of FIG. 3B).

For example, the first cell information may include at least one of the number of antenna elements of the RU 220 used to transmit and receive a signal on the first cell, an antenna port of the antenna element of the RU 220 used to transmit and receive the signal, the number of layers (or MIMO layers) associated with the antenna elements, an index for indicating a precoding matrix (e.g., a precoding matrix indicator (PMI)), or information indicating a type of a codebook including the precoding matrix. For example, the second cell information may include at least one of the number of antenna elements of the RU 220 used to transmit and receive a signal on the second cell 501 and the second cell 502, an antenna port of the antenna element of the RU 220 used to transmit and receive the signal, the number of layers (or MIMO layers) associated with the antenna elements, an index for indicating a precoding matrix (e.g., a precoding matrix indicator (PMI)), or information indicating a type of a codebook including the precoding matrix.

For example, the number of antenna elements may include four (4T4R) and eight (8T8R). However, the embodiment of the present disclosure is not limited thereto. The number of antenna elements may be set to more than eight or less than four. For example, the antenna port may indicate antenna port information for the antenna element used to transmit and receive the signal. For example, in a case that only four antenna elements are used to transmit and receive a signal on the cell even when the RU 220 includes eight antenna elements, it may indicate antenna port information for each of the four antenna elements. For example, a type of the codebook may include single user-MIMO (SU-MIMO) or multiple user-MIMO (MU-MIMO).

In operation 810, the RU 220 may identify at least one first MIMO layer and at least one second MIMO layer among a plurality of MIMO layers associated with the memory of the RU 220. In FIG. 8, for convenience of description, it is assumed as an example that the plurality of MIMO layers are eight, and each of the at least one first MIMO layer and the at least one second MIMO layer is four.

For example, the RU 220 may identify the at least one first MIMO layer for the first cell based on the first cell information. For example, the RU 220 may identify the at least one first MIMO layer for the first cell, based on the number of MIMO layers for the first cell included in the first cell information, antenna port information, and the like. In addition, the RU 220 may identify the at least one second MIMO layer based on the second cell information. For example, the memory may include the memory 725 of FIG. 7A. For example, the plurality of MIMO layers may indicate the entire MIMO layers included in the RU 220 associated with the memory. For example, the at least one first MIMO layer may indicate a MIMO layer for transmitting and receiving a signal for the first cell. The at least one first MIMO layer may be referred to as a first set of MIMO layers. For example, the at least one second MIMO layer may indicate a MIMO layer for transmitting and receiving a signal for the second cell. The at least one second MIMO layer may be referred to as a second set of MIMO layers.

In operation 820, the RU 220 may identify a first precoding matrix and first address information based on the first cell information, and identify a second precoding matrix and second address information based on the second cell information.

For example, the RU 220 may identify the first precoding matrix for the first cell based on the first cell information. For example, the first precoding matrix may be a $4\times4$ matrix. For example, the RU 220 may identify the first precoding matrix, based on a plurality of first bit strings for the first cell included in the first cell information and first precoding weights corresponding to the plurality of first bit strings. For example, the plurality of first bit strings and the first precoding weights may be configured with 16 sets. For example, the RU 220 may identify the first address information, based on a relationship between the at least one first MIMO layer and the plurality of MIMO layers identified using the first cell information. In the examples of FIGS. 7A and 7B, the first address information may indicate a 4x4 block matrix portion on the upper left among the 8x8 precoding matrix for the plurality of MIMO layers. For example, the first address information may include a specific bit (e.g., the first bit 791a and the second bit 792a) of the bit string for the 8x8 precoding matrix. For example, a value of the specific bit may indicate a value (e.g., 0) corresponding to the upper left. The bit string for the 8x8 precoding matrix may include information on one of the plurality of first bit strings and the first address information. The information on the bit string may include a location for a row and a location for a column within the first precoding matrix indicated by one of the first bit strings. The location for the row and the location for the column may indicate one element of the first precoding matrix.

For example, the RU 220 may identify the second precoding matrix for the second cell based on the second cell information. For example, the second precoding matrix may be a $4\times4$ matrix. For example, the RU 220 may identify the second precoding matrix, based on a plurality of second bit strings for the second cell included in the second cell information and second precoding weights corresponding to the plurality of second bit strings. For example, the plurality of second bit strings and the second precoding weights may be configured with 16 sets. For example, the RU 220 may identify the second address information based on a relationship between the at least one second MIMO layer and the plurality of MIMO layers identified using the second cell information. In the examples of FIGS. 7A and 7B, the second address information may indicate a 4x4 block matrix portion on the lower right of the 8x8 precoding matrix for the plurality of MIMO layers. For example, the second address information may include a specific bit (e.g., the first bit 791a and the second bit 792a) of the bit string for the 8x8 precoding matrix. For example, a value of the specific bit may indicate a value (e.g., 1) corresponding to the lower right. The bit string for the 8x8 precoding matrix may include information on one of the plurality of second bit strings and second address information. The information on the bit string may include a location for a row and a location for a column within the second precoding matrix indicated by one of the second bit strings. The location for the row and the location for the column may indicate one element of the second precoding matrix.

For example, each of the plurality of first bit strings may be identified based on information on an index for indicating the 8x8 precoding matrix. Each of the plurality of second bit strings may be identified based on information on the index. The information on the index may include a precoding matrix indicator (PMI). The information on the index indicating the 8x8 precoding matrix may be the same as the information on an index included in each of the plurality of first bit strings. The information on the index indicating the 8x8 precoding matrix may be the same as the information on an index included in each of the plurality of second bit strings. In other words, the plurality of first bit strings may indicate the same 8x8 precoding matrix as the plurality of second bit strings.

In operation 830, the RU 220 may identify a precoding matrix for the plurality of MIMO layers, based on the first precoding matrix, the second precoding matrix, the first address information, and the second address information. For example, the precoding matrix may indicate the 8x8 precoding matrix.

For example, the RU 220 may identify bit strings for the 8x8 precoding matrix, based on the plurality of first bit strings for the first precoding matrix, the first precoding weights, and the first address information. The RU 220 may identify bit strings for the 8x8 precoding matrix based on the plurality of second bit strings for the second precoding matrix, the second precoding weights, and the second address information. The RU 220 may identify the 8x8 precoding matrix based on the bit strings for the identified 8x8 precoding matrix. The 8x8 precoding matrix may be a block diagonal matrix formed based on the first precoding matrix and the second precoding matrix. In the 8x8 precoding matrix, the remaining elements except for the elements of the block diagonal matrix may be formed as 0.

In operation 840, the RU 220 may store the precoding matrix in the memory for the plurality of MIMO layers. For example, the RU 220 may store the 8x8 precoding matrix in the memory (e.g., the memory 725 of FIG. 7A) for the plurality of MIMO layers.

In operation 850, the RU 220 may transmit a first signal on the first cell and a second signal on the second cell, by applying the precoding matrix to an input signal. For example, the RU 220 may obtain the input signal from the DU through the fronthaul. For example, the input signal may include first data for the first cell and second data for the second cell. For example, the first data and the second data may be formed as a 4x1 vector. For example, the RU 220 may apply the 8x8 precoding matrix to the input signal, based on a precoding block (e.g., the precoding block 740). For example, the RU 220 may process the input signal to which the 8x8 precoding matrix is applied, through a digital front end and RF analog circuits (e.g., digital front end and RF analog circuits 760). For example, the RU 220 may transmit the first signal corresponding to the first data on the first cell by using antenna elements corresponding to the at least one first MIMO layer. For example, the RU 220 may transmit the second signal corresponding to the second data on the second cell by using antenna elements corresponding to the at least one second MIMO layer.

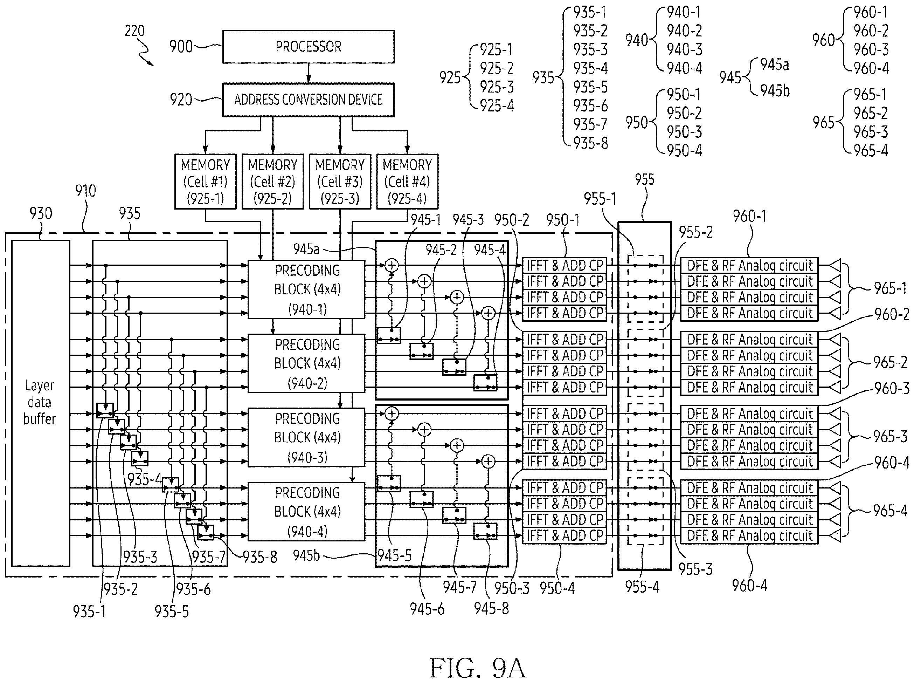

Referring to FIGS. 7A to 8, an example of providing a service for a plurality of cells (e.g., 2 cells) through an RU architecture for one cell according to an embodiment of the present disclosure has been described. Hereinafter, in FIGS. 9A to 10, an example of providing a service for one cell through an RU architecture for a plurality of cells according to an embodiment of the present disclosure will be described.

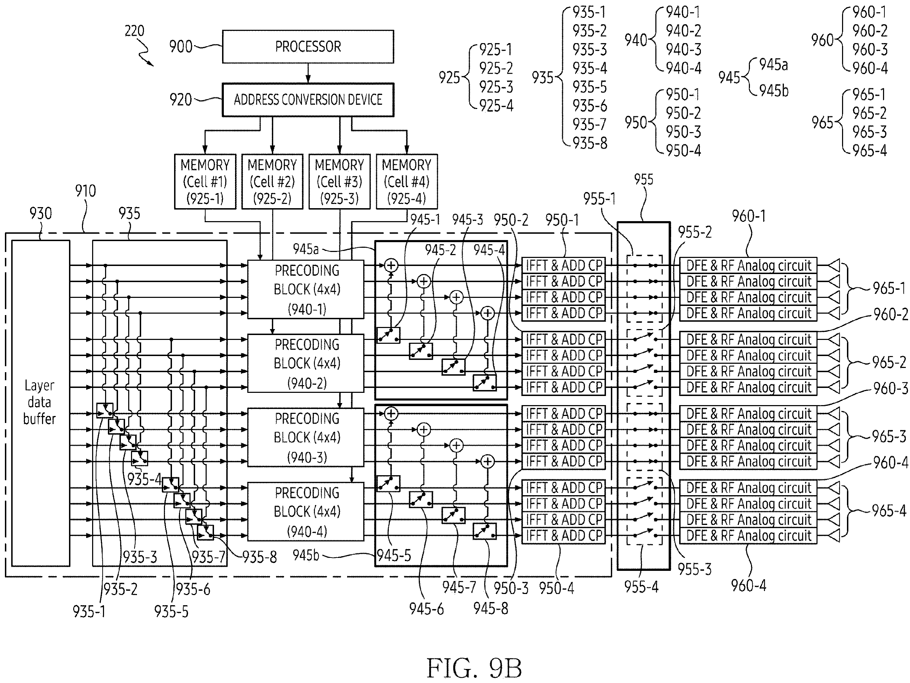

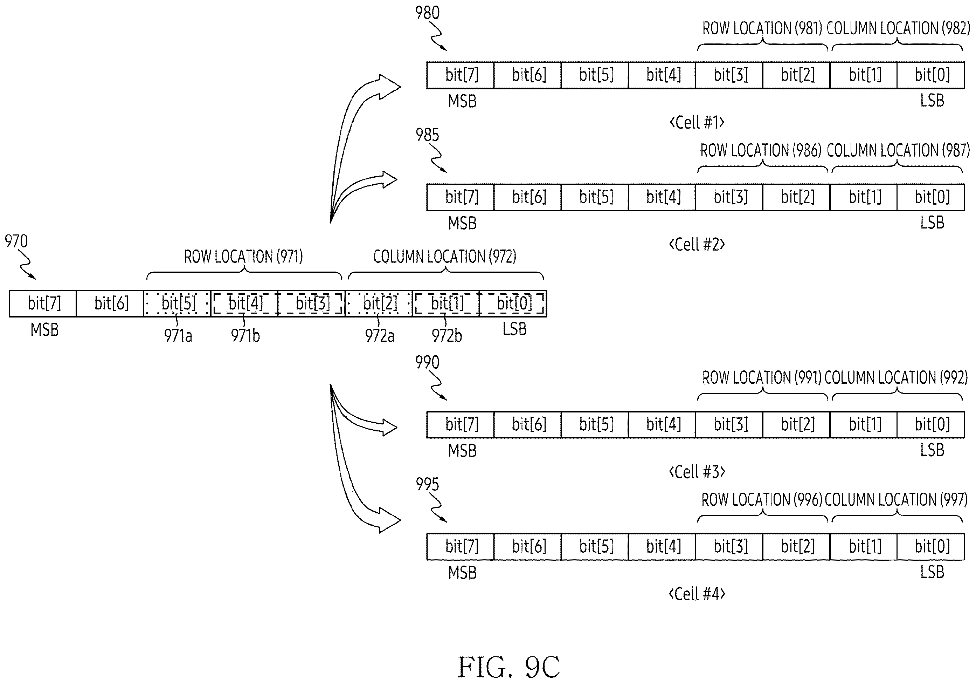

FIGS. 9A and 9B illustrate an example of a method of supporting one cell through an RU architecture for a plurality of cells. FIG. 9C illustrates an example of a bit string for four 4x4 precoding matrices identified based on bit strings for an 8x8 precoding matrix.

The RU 220 of FIGS. 9A and 9B may illustrate an example of the RU 220 of FIG. 2. For example, the RU 220 of FIGS. 9A and 9B may be connected to a DU (not illustrated) (e.g., the DU 210 of FIG. 2) through a fronthaul (not illustrated). For example, the fronthaul may include the fronthaul transceiver 365 of FIG. 3B.

Referring to FIGS. 9A and 9B, the RU 220 may include a processor 900, baseband signal processing blocks 910, a digital front end, and RF analog circuits 960. In FIGS. 9A and 9B, a fronthaul is not illustrated for convenience of explanation, but the embodiment of the present disclosure is not limited thereto. For example, the RU 220 may further include or include fewer components of FIGS. 9A and 9B.

For example, the processor 900 may indicate a component to which an operating system (OS) and software have been uploaded. For example, the processor 900 may operate based on the OS and/or the software programming.

For example, the processor 900 may identify setting information based on data obtained by the fronthaul from the DU. For example, the processor 900 may obtain cell addition information (hereinafter, cell information) obtained from the DU. The cell information may be obtained for each cell. For example, in a case of providing a service for the first cell 501 like the RU 220 of FIG. 5A, the RU 220 may obtain cell information for the first cell 501.

For example, the cell information may include at least one of the number of antenna elements of the RU 220 used to transmit and receive a signal on the first cell 501, an antenna port of the antenna element of the RU 220 used to transmit and receive the signal, the number of layers (or MIMO layers) associated with the antenna elements, an index for indicating a precoding matrix (e.g., a precoding matrix indicator (PMI)), or information indicating a type of a codebook including the precoding matrix.

For example, the number of the antenna elements may include four (4T4R) and eight (8T8R). However, the embodiment of the present disclosure is not limited thereto. The number of the antenna elements may be set to more than 8 or less than 4. For example, the antenna port may indicate antenna port information with respect to the antenna element used to transmit and receive the signal. For example, in a case that only four antenna elements are used to transmit and receive the signal on the cell even when the RU 220 includes 16 antenna elements, it may indicate antenna port information with respect to each of the four antenna elements. For example, a type of the codebook may include single user-MIMO (SU-MIMO) or multiple user-MIMO (MU-MIMO).

For example, processor 900 may control baseband signal processing blocks 910, a digital front end, and RF analog circuits 960, based on the identified setting information. For example, as described later, the processor 900 may store a plurality of precoding matrices for performing precoding in the memories 925. For example, the processor 900 may control the digital front end and RF analog circuits 960 to process a signal generated by applying a precoding matrix to an input signal.

For example, the RU 220 may obtain data from the DU by using the fronthaul. For example, the data may include parameter data for control and traffic data indicating information that is actually intended to be transmitted. For example, the data may include in-phase/quadrature (I/Q) data or an I/Q signal. The traffic data may be referred to as an input signal.

For example, each of the baseband signal processing blocks 910 may include components for processing the data obtained through the fronthaul. For example, a first baseband signal processing block may include a first precoding block 940-1 and a first set of inverse fast Fourier transform (IFFT) and cyclic prefix add blocks 950-1. For example, a second baseband signal processing block may include a second precoding block 940-2 and a second set of IFFT&CP add blocks 950-2. For example, a third baseband signal processing block may include a third precoding block 940-3 and a third set of IFFT&CP add blocks 950-3. For example, a fourth baseband signal processing block may include a fourth precoding block 940-4 and a fourth set of IFFT&CP add blocks 950-4. For example, the baseband signal processing blocks 910 may share a buffer 930.

For example, each of the baseband signal processing blocks 910 may be connected to one memory that stores $4 \times 4$ precoding matrices. For example, the first baseband signal processing block may be connected to first memory 925-1. For example, the second baseband signal processing block may be connected to second memory 925-2. For example, the third baseband signal processing block may be connected to third memory 925-3. For example, the fourth baseband signal processing block may be connected to fourth memory 925-4.

For example, thte baseband signal processing blocks 910 may include a buffer 930 for aligning data for 16 MIMO layers. For example, the baseband signal processing blocks 910 may include a plurality of sixteen IFFT & CP add blocks 950. Each of the baseband signal processing blocks 910 may include a plurality of four IFFT & CP add blocks. For example, the plurality of IFFT & CP add blocks 950 may correspond to a digital front end and the RF analog circuits 960. For example, the four IFFT & CP add blocks 950-1 may correspond to four digital front ends and RF analog circuits 960-1. For example, four IFFT & CP add blocks 950-2 may correspond to four digital front end and RF analog circuits 960-2. For example, four IFFT & CP add blocks 950-3 may correspond to four digital front end and RF analog circuits 960-3. For example, four IFFT & CP add blocks 950-4 may correspond to four digital front end and RF analog circuits 960-4.

For example, the memories 925 may indicate memory including information for precoding. For example, the information for precoding may include a plurality of precoding matrices. The plurality of precoding matrices may be referred to as a codebook. Each of the memories 925 may include a plurality of codebooks. For example, the precoding matrix may include PMI, a bit string indicating a location (or address) of a row of the precoding matrix and a location (or address) of a column of the precoding matrix, and a precoding weight indicating a value of an element of the precoding matrix corresponding to the location of the row and the location of the column. In other words, the precoding matrix may include a plurality of bit strings and a plurality of precoding weights. For example, a 4x4 precoding matrix may include 16 bit strings and 16 weights. For example, the memories 925 may be included in the memory 370 of FIG. 3.

For example, the buffer 930 may align the data (or input signal) obtained from the fronthaul for each layer. The layer may be referred to as a MIMO layer. In the example of FIG. 9A, the RU 220 including 16 antenna elements 965 may include 16 MIMO layers. In other words, in the present disclosure, for convenience of description, one MIMO layer may be defined as being associated with one antenna element.

For example, the precoding block 940 may perform precoding on data (or input signal) aligned for each layer. For example, in order to perform precoding on the data aligned with 16 MIMO layers, each of precoding blocks 940 may use a 4x4 precoding matrix. For example, the 4x4 precoding matrix may be a precoding matrix obtained from the memory 925-1, 925-2, 925-3, or 925-4. For example, each of the precoding blocks 940 may use a precoding matrix corresponding to the number of layers identified based on the cell information.

For example, the plurality of IFFT&CP add blocks 950 may perform IFFT conversion on the data (or input signal) processed through the precoding block 940 and add CP. For example, IFFT&CP add blocks 950-1 may perform IFFT conversion on the data (or input signal) for specific MIMO layer and add CP. For example, the specific MIMO layers may indicate a layer associated with antenna elements 965-1. The IFFT&CP add blocks 950-1 may indicate an IFFT&CP add block associated with the precoding block 940-1. As described above, a data processing flow may indicate a processing flow when processing a downlink signal. For example, when processing an uplink signal, each of the plurality of IFFT&CP add blocks 950 may remove CP and perform FFT conversion.

For example, the baseband signal processing blocks 940 may include a control block 935. For example, the control block 935 may indicate a component for controlling a path for data for each layer aligned from the buffer 930. For example, the control block 935 may include switches 935-1, 935-2, 935-3, and 935-4 for connecting paths connected to the precoding block 940-1 and paths connected to the precoding block 940-3. In addition, the control block 935 may include switches 935-5, 935-6, 935-7, and 935-8 to connect paths connected to the precoding block 940-2 and paths to be connected to the precoding block 940-4. The switches 935-1, 935-2, 935-3, 935-4, 935-5, 935-6, 935-7, and 935-8 in the control block 935 of FIG. 9A may be in an on state. For example, when the switches 935-1, 935-2, 935-3, 935-4, 935-5, 935-6, 935-7, and 935-8 are in the on state, the switches 935-1, 935-2, 935-3, 935-4, 935-5, 935-6, 935-7, and 935-8 may disconnect paths connected to a specific precoding block from paths connected to another specific precoding block. For example, when the switches 935-1, 935-2, 935-3, and 935-4 are in the on state, paths connected to the precoding block 940-1 and paths connected to the precoding block 940-3 may be disconnected. Alternatively, the switches 935-1, 935-2, 935-3, 935-4, 935-5, 935-6, 935-7, and 935-8 in the control block 935 of FIG. 9B may be in an off state. For example, when the switches 935-1, 935-2, 935-3, 935-4, 935-5, 935-6, 935-7, and 935-8 are in the off state, the switches 935-1, 935-2, 935-3, 935-4, 935-5, 935-6, 935-7, and 935-8 may connect paths connected to a specific precoding block and paths connected to another specific precoding block. For example, when the switches 935-1, 935-2, 935-3, and 935-4 are in the off state, paths connected to the precoding block 940-1 and paths connected to the precoding block 940-3 may be connected.

For example, the baseband signal processing blocks 940 may include the control blocks 945. For example, the control blocks 945 may indicate a component for combining output data of the precoding blocks 940. For example, the control blocks 945 may include a control block 945a for combining outputs of the precoding block 940-1 and the precoding block 940-2. For example, the control blocks 945 may include a control block 945b for combining outputs of the precoding block 940-3 and the precoding block 940-4. For example, the control block 945a may include switches 945-1, 945-2, 945-3, and 945-4 for connecting paths connected to the precoding block 940-1 and paths connected to the precoding block 940-2. For example, the control block 945b may include switches 945-5, 945-6, 945-7, and 945-8 for connecting paths connected to the precoding block 940-3 and paths connected to the precoding block 940-4. In FIG. 9A, the switches 945-1, 945-2, 945-3, and 945-4 in the control block 945a and the switches 945-5, 945-6, 945-7, and 945-8 in the control block 945b may be in the on state. For example, whenn switches 945-1, 945-2, 945-3, and 945-4 or switches 945-5, 945-6, 945-7, and 945-8 are in the on state, the switches 945-1, 945-2, 945-3, and 945-4 or the switches 945-5, 945-6, 945-7, and 945-8 may disconnect a connection between output of a specific precoding block and output of another specific precoding block. For example, when the switches 945-1, 945-2, 945-3, and 945-4 are in the on state, the switches 945-1, 945-2, 945-3, and 945-4 may not combine the output of the precoding block 940-1 with the output of the precoding block 940-2. Alternatively, the switches 945-1, 945-2, 945-3, and 945-4 in the control block 945a of FIG. 9B and the switches 945-5, 945-6, 945-7, and 945-8 in the control block 945b may be in the off state. For example, when the switches 945-1, 945-2, 945-3, and 945-4, or the switches 945-5, 945-6, 945-7, and 945-8 are in the off state, the switches 945-1, 945-2, 945-3, and 945-4, or switches 945-5, 945-6, 945-7, and 945-8 may connect output of a specific precoding block to output of another specific precoding block. For example, when the switches 945-1, 945-2, 945-3, and 945-4 are in the off state, the switches 945-1, 945-2, 945-3, and 945-4 may combine output of the precoding block 940-1 with output of the precoding block 940-2.

For example, the baseband signal processing blocks 910 may include a control block 955. The control block 955 may indicate a component for controlling a connection state between the baseband signal processing blocks 910 and a digital front end and RF analog circuits 960. For example, the control block 955 may include switches 955-1 connecting the first baseband signal processing block with a digital front end and RF analog circuits 960-1. For example, the control block 955 may include switches 955-2 connecting the second baseband signal processing block with a digital front end and the RF analog circuits 960-2. For example, the control block 955 may include switches 955-3 connecting the third baseband signal processing block with a digital front end and RF analog circuits 960-3. For example, the control block 955 may include switches 955-4 connecting the fourth baseband signal processing block with a digital front end and RF analog circuits 960-4. The switches 955-1, 955-2, 955-3, and 955-4 in the control block 955 of FIG. 9A may be in the on state. For example, when the switches 955-1, 955-2, 955-3, and 955-4 are in the on state, the switches 955-1, 955-2, 955-3, and 955-4 may connect the baseband signal processing blocks 910 to a digital front end and RF analog circuits 960. For example, when the switches 955-1 are in the on state, the switches 955-1 may connect the first baseband signal processing block to a digital front end and RF analog circuits 960-1. Alternatively, the switches 955-2 and 955-4 in the control block 955 of FIG. 9B may be in the off state. For example, when the switches 955-2 and 955-4 are in the off state, the switches 955-2 and 955-4 may disconnect a connection between the baseband signal processing blocks 910 and a digital front end and RF analog circuits 960. For example, when the switches 955-2 are in the off state, the switches 955-2 may disconnect a connection between the second baseband signal processing block and a digital front end and RF analog circuits 960-2.

For example, among the digital front end and the RF analog circuits 960, the digital front ends may perform mapping to a corresponding antenna element for data processed by the baseband signal processing block 910. In addition, the digital front ends may include a digital up converter (DUC) or a digital down converter (DDC). In a case of downlink (i.e., in a case of transmitting), the DUC may convert each of the data, which is a baseband signal, into a digital intermediate frequency (IF) signal. In a case of uplink (i.e., in a case of receiving), the DDC may convert the digital IF signals into a plurality of baseband signals. For example, the digital front ends may include a crest factor reduction (CFR) and a digital pre distortion (DPD). The CFR may indicate a component for reducing a peak to average power ratio (PAPR) of a baseband signal. The DPD may indicate a component for outputting a linear signal by applying a predistortion with respect to the baseband signal processed by the CFR.

For example, the RF analog circuits may include components that convert and process a baseband signal (or IF signal) processed from the digital front ends into an RF signal. For example, each of the RF analog circuits may include a digital to analog converter (DAC), an analog to digital converter (ADC), a power amplifier, and antenna elements 645. However, the embodiment of the present disclosure is not limited thereto, and each of the RF analog circuits may further include or may include fewer components in addition to the above-described components.

Referring to FIGS. 9A and 9B, the RU 220 may include an address conversion device 920. For example, the address conversion device 920 may indicate a component for storing a plurality of precoding matrices of a lower dimension (e.g., 4x4) in the memory 925 based on one precoding matrix of a high dimension (e.g., 8x8). Although FIGS. 9A and 9B illustrate the RU 220 including the address converting device 920 which is a separate component, the embodiment of the present disclosure is not limited thereto. For example, the address converting device 920 may be included in the processor 900. Alternatively, functions performed by the address conversion device 920 may be performed by the operation of the processor 900. For example, the address conversion device 920 may generate a plurality of bit strings for generating a precoding matrix of a low-dimension by setting an address to be stored in the memories 925 with respect to a plurality of bit strings for generating a precoding matrix of a high-dimension. For description of the operation of the address conversion device 920 (or the processor 900), an example of FIG. 9C may be referred to.

Referring to FIG. 9C, a bit string 970 may indicate a bit string for an $8 \times 8$ precoding matrix. For example, the bit string 970 may indicate a bit string having a size (or length) of 8 bits. However, the embodiment of the present disclosure is not limited thereto. For example, the bit string 970 may indicate a bit string for generating the 8x8 precoding matrix for a plurality of MIMO layers. For example, the plurality of MIMO layers may indicate a portion of all MIMO layers included in the RU 220 of FIGS. 9A and 9B. For example, an element corresponding to a location in the 8x8 precoding matrix identified based on the bit string 970 may have a value of a precoding weight associated with the bit string 970. For example, the location may be identified based on a first portion 971 and a second portion 972 of the bit string 970. For example, the first portion 971 may include bits for indicating a location of a row of the 8x8 precoding matrix. For example, the second portion 972 may include bits for indicating a position of a column of the 8x8 precoding matrix. Since the 8x8 precoding matrix includes 8 rows and 8 columns, each of the first portion 971 and the second portion 972 may include 3 bits. For example, when the first portion 971 is '001' and the second portion 972 is '111', the location may indicate an element corresponding to the eighth column of the second row. In this case, the precoding weight associated with the bit string 970 may indicate a value of the element. The 8x8 precoding matrix may be formed based on 64 bit strings and 64 precoding weights. The 64 bit strings and 64 precoding weights may be exemplified as illustrated in the following table.

[Table 4]

| Bit string | Precoding weight | Bit string | Precoding weight |
|---|---|---|---|
| 00_000_000 | $W_{0,0}$ | 00_100_000 | $W_{4,0}$ |
| 00_000_001 | $W_{0,1}$ | 00_100_001 | $W_{4,1}$ |
| 00_000_010 | $W_{0,2}$ | 00_100_010 | $W_{4,2}$ |
| 00_000_011 | $W_{0,3}$ | 00_100_011 | $W_{4,3}$ |
| 00_000_100 | $W_{0,4}$ | 00_100_100 | $W_{4,4}$ |
| 00_000_101 | $W_{0,5}$ | 00_100_101 | $W_{4,5}$ |
| 00_000_110 | $W_{0,6}$ | 00_100_110 | $W_{4,6}$ |
| 00_000_111 | $W_{0,7}$ | 00_100_111 | $W_{4,7}$ |
| 00_001_000 | $W_{1,0}$ | 00_101_000 | $W_{5,0}$ |
| 00_001_001 | $W_{1,1}$ | 00_101_001 | $W_{5,1}$ |
| 00_001_010 | $W_{1,2}$ | 00_101_010 | $W_{5,2}$ |
| 00_001_011 | $W_{1,3}$ | 00_101_011 | $W_{5,3}$ |
| 00_001_100 | $W_{1,4}$ | 00_101_100 | $W_{5,4}$ |
| 00_001_101 | $W_{1,5}$ | 00_101_101 | $W_{5,5}$ |
| 00_001_110 | $W_{1,6}$ | 00_101_110 | $W_{5,6}$ |
| 00_001_111 | $W_{1,7}$ | 00_101_111 | $W_{5,7}$ |
| 00_010_000 | $W_{2,0}$ | 00_110_000 | $W_{6,0}$ |
| 00_010_001 | $W_{2,1}$ | 00_110_001 | $W_{6,1}$ |
| 00_010_010 | $W_{2,2}$ | 00_110_010 | $W_{6,2}$ |
| 00_010_011 | $W_{2,3}$ | 00_110_011 | $W_{6,3}$ |
| 00_010_100 | $W_{2,4}$ | 00_110_100 | $W_{6,4}$ |
| 00_010_101 | $W_{2,5}$ | 00_110_101 | $W_{6,5}$ |
| 00_010_110 | $W_{2,6}$ | 00_110_110 | $W_{6,6}$ |
| 00_010_111 | $W_{2,7}$ | 00_110_111 | $W_{6,7}$ |
| 00_011_000 | $W_{3,0}$ | 00_111_000 | $W_{7,0}$ |
| 00_011_001 | $w_{3,1}$ | 00_111_001 | $W_{7,1}$ |
| 00_011_010 | $W_{3,2}$ | 00_111_010 | $W_{7,2}$ |
| 00_011_011 | $W_{3,3}$ | 00_111_011 | $W_{7,3}$ |
| 00_011_100 | $W_{3,4}$ | 00_111_100 | $W_{7,4}$ |
| 00_011_101 | $W_{3,5}$ | 00_111_101 | $W_{7,5}$ |
| 00_011_110 | $W_{3,6}$ | 00_111_110 | $W_{7,6}$ |
| 00_01_111 | $W_{3,7}$ | 00_111_111 | $W_{7,7}$ |

Referring to the above table, the first to third bits from the right (LSB) of the bit string (i.e., the second portion 972) may indicate a location of column of an $8\times8$ precoding matrix. The fourth to sixth bits from the right (LSB) of the bit string (i.e., the first portion 971) may indicate a location of row of the $8\times8$ precoding matrix. Each of the bit strings may be associated with a precoding weight. The precoding weight $W_{x,y}$ may indicate a weight value of a y-column of an x-row. For example, $W_{2,1}$ may indicate a weight of the second column of the third row. The 8x8 precoding matrix generated based on the table is illustrated in the following equation.

[Equation 9]

$$\begin{bmatrix} W_{0,0} & W_{0,1} & W_{0,2} & W_{0,3} & W_{0,4} & W_{0,5} & W_{0,6} & W_{0,7} \\ W_{1,0} & W_{1,1} & W_{1,2} & W_{1,3} & W_{1,4} & W_{1,5} & W_{1,6} & W_{1,7} \\ W_{2,0} & W_{2,1} & W_{2,2} & W_{2,3} & W_{2,4} & W_{2,5} & W_{2,6} & W_{2,7} \\ W_{3,0} & W_{3,1} & W_{3,2} & W_{3,3} & W_{3,4} & W_{3,5} & W_{3,6} & W_{3,7} \\ W_{4,0} & W_{4,1} & W_{4,2} & W_{4,3} & W_{4,4} & W_{4,5} & W_{4,6} & W_{4,7} \\ W_{5,0} & W_{5,1} & W_{5,2} & W_{5,3} & W_{5,4} & W_{5,5} & W_{5,6} & W_{5,7} \\ W_{6,0} & W_{6,1} & W_{6,2} & W_{6,3} & W_{6,4} & W_{6,5} & W_{6,6} & W_{6,7} \\ W_{7,0} & W_{7,1} & W_{7,2} & W_{7,3} & W_{7,4} & W_{7,5} & W_{7,6} & W_{7,7} \end{bmatrix}$$

The 8x8 precoding matrix of Equation 9 may indicate a precoding matrix for supporting one cell using 8T8R. The RU 220 of FIG. 9A, which provides a service to four cells using 4T4R, may process an input signal based on one 8x8 precoding matrix, thereby providing a service for substantially one cell. The associated equation may be defined as follows.

[Equation 10]

$$\begin{bmatrix} \mathbf{A} & \mathbf{B} \\ \mathbf{C} & \mathbf{D} \end{bmatrix} \begin{bmatrix} \mathbf{d}_1 \\ \mathbf{d}_2 \end{bmatrix} = \begin{bmatrix} \mathbf{A} \cdot \mathbf{d}_1 + \mathbf{B} \cdot \mathbf{d}_2 \\ \mathbf{C} \cdot \mathbf{d}_1 + \mathbf{D} \cdot \mathbf{d}_2 \end{bmatrix}$$

The **A** may indicate a 4x4 precoding matrix for a first cell, the **B** may indicate a 4x4 precoding matrix for a second cell, the **C** may indicate a 4x4 precoding matrix for a third cell, the **D** may indicate a 4x4 precoding matrix for a fourth cell, the $\mathbf{d}_1$ may indicate input data in a form of a 4x1 vector, and the $\mathbf{d}_2$ may indicate input data in a form of a 4x1 vector. Referring to the above-described equation, one 8x8 precoding matrix may be generated based on four 4x4 precoding matrices. When the input data for the first cell and the input data for the third cell are set equally ($\mathbf{d}_1$) and the input data for the second cell and the input data for the fourth cell are set equally ($\mathbf{d}_2$), the RU 220 supporting the four cells may provide a service for one cell.

Referring to the above description, in order to convert the 8x8 precoding matrix into a plurality of 4x4 precoding matrices, a conversion of the bit string 970 for the 8x8 precoding matrix may be performed. For example, the processor 900 (or address conversion device 920) of the RU 220 may convert a bit string (e.g., the bit string 970) for the 8x8 precoding matrix into a bit string (e.g., the bit string 980, the bit string 985, the bit string 990, or the bit string 995) for the 4x4 precoding matrix, based on a location the 4x4 precoding matrix in the 8x8 precoding matrix.

For example, the upper left of the 8x8 precoding matrix generated based on the bit string 970 for one cell may indicate a 4x4 precoding matrix for a first cell. The bit string 980 for generating the 4x4 precoding matrix for the first cell may include information on first bits 971b and second bits 972b of the bit string 970. For example, the first bits 971b may be inserted into the first portion 981 of the bit string 980, and the second bits 972b may be inserted into the second portion 982. A first bit 971a and a second bit 972a of the bit string 970 may indicate the first cell. For example, when values of both the first bit 971a and the second bit 972a are 0, the first cell may be indicated. When values of both the first bit 971a and the second bit 972a are 0, it may indicate the 4x4 block matrix portion of the upper left in the 8x8 precoding matrix. In this case, the first bit 971a and the second bit 972a, which are all set to 0, may be referred to as first address information.

For example, the upper right of the 8x8 precoding matrix generated based on the bit string 970 for one cell may indicate a 4x4 precoding matrix for a second cell. The bit string 985 for generating the 4x4 precoding matrix for the second cell may include information on first bits 971b and second bits 972b of the bit string 970. For example, the first bits 971b may be inserted into the first portion 986 of the bit string 985 and the second bits 972b may be inserted into the second portion 987. The first bit 971a and the second bit 972a of the bit string 970 may indicate the second cell. For example, when a value of the first bit 971a is 0 and a value of the second bit 972a is 1, the second cell may be indicated. When the value of the first bit 971a is 0 and the value of the second bit 972a is 1, it may indicate the 4x4 block matrix portion of the upper right in the 8x8 precoding matrix. In this case, the first bit 971a set to 0 and the second bit 972a set to 1 may be referred to as second address information.

For example, the lower left of the 8x8 precoding matrix generated based on the bit string 970 for one cell may represent a 4x4 precoding matrix for a third cell. The bit string 990 for generating the 4x4 precoding matrix for the third cell may include information on first bits 971b and second bits 972b of the bit string 970. For example, the first bits 971b may be inserted into the first portion 991 of the bit string 990, and the second bits 972b may be inserted into the second portion 992. The first bit 971a and the second bit 972a of the bit string 970 may indicate the third cell. For example, when a value of the first bit 971a is 1, and a value of the second bit 972a is 0, the third cell may be indicated. When the value of the first bit 971a is 1, and the value of the second bit 972a is 0, it may indicate the 4x4 block matrix portion of the lower left in the 8x8 precoding matrix. In this case, the first bit 971a set to 1 and the second bit 972a set to 0 may be referred to as third address information.

For example, the lower right of the 8x8 precoding matrix generated based on the bit string 970 for one cell may indicate a 4x4 precoding matrix for a fourth cell. The bit string 995 for generating the 4x4 precoding matrix for the fourth cell may include information on the first bits 971b and the second bits 972b of the bit string 970. For example, the first bits 971b may be inserted into the first portion 996 of the bit string 995 and the second bits 972b may be inserted into the second portion 997. The first bit 971a and the second bit 972a of the bit string 970 may indicate the third cell. For example, when values of the first bit 971a and the second bit 972a are both 1, the fourth cell may be indicated. When the values of the first bit 971a and the second bit 972a are both 1, it may indicate the 4x4 block matrix portion of the lower right in the 8x8 precoding matrix. In this case, the first bit 971a and the second bit 972a, both set to 1, may be referred to as fourth address information.

Based on the 64 bit strings 970 forming the 8x8 precoding matrix, a weight of each of the 16 bit strings 980, 16 bit strings 985, 16 bit strings 990, and 16 bit strings 985 may be defined as illustrated in the table below.

[Table 5]

| Memory location | Bit string | Precoding weight | Memory location | Bit string | Precoding weight |
|---|---|---|---|---|---|
| First cell | 0000_00_00 | $W_{0,0}$ | Third cell | 0000_00_00 | $W_{4,0}$ |
| | 0000_00_01 | $W_{0,1}$ | | 0000_00_01 | $W_{4,1}$ |
| | 0000_00_10 | $W_{0,2}$ | | 0000_00_10 | $W_{4,2}$ |
| | 0000_00_11 | $W_{0,3}$ | | 0000_00_11 | $W_{4,3}$ |
| | 0000_01_00 | $W_{1,0}$ | | 0000_01_00 | $W_{5,0}$ |
| | 0000_01_01 | $W_{1,1}$ | | 0000_01_01 | $W_{5,1}$ |
| | 0000_01_10 | $W_{1,2}$ | | 0000_01_10 | $W_{5,2}$ |
| | 0000_01_11 | $W_{1,3}$ | | 0000_01_11 | $W_{5,3}$ |
| | 0000_10_00 | $W_{2,0}$ | | 0000_10_00 | $W_{6,0}$ |
| | 0000_10_01 | $W_{2,1}$ | | 0000_10_01 | $W_{6,1}$ |
| | 0000_10_10 | $W_{2,2}$ | | 0000_10_10 | $W_{6,2}$ |
| | 0000_10_11 | $W_{2,3}$ | | 0000_10_11 | $W_{6,3}$ |
| | 0000_11_00 | $W_{3,0}$ | | 0000_11_00 | $W_{7,0}$ |
| | 0000_11_00 | $W_{3,1}$ | | 0000_11_00 | $W_{7,1}$ |
| | 0000_11_00 | $W_{3,2}$ | | 0000_11_00 | $W_{7,2}$ |
| | 0000_11_00 | $W_{3,3}$ | | 0000_11_00 | $W_{7,3}$ |
| Second cell | 0000_00_00 | $W_{0,4}$ | Fourth cell | 0000_00_00 | $W_{4,4}$ |
| | 0000_00_01 | $W_{0,5}$ | | 0000_00_01 | $W_{4,5}$ |
| | 0000_00_10 | $W_{0,6}$ | | 0000_00_10 | $W_{4,6}$ |
| | 0000_00_11 | $W_{0,7}$ | | 0000_00_11 | $W_{4,7}$ |
| | 0000_01_00 | $W_{1,4}$ | | 0000_01_00 | $W_{5,4}$ |
| | 0000_01_01 | $W_{1,5}$ | | 0000_01_01 | $W_{5,5}$ |
| | 0000_01_10 | $W_{1,6}$ | | 0000_01_10 | $W_{5,6}$ |
| | 0000_01_11 | $W_{1,7}$ | | 0000_01_11 | $W_{5,7}$ |
| | 0000_10_00 | $W_{2,4}$ | | 0000_10_00 | $W_{6,4}$ |
| | 0000_10_01 | $W_{2,5}$ | | 0000_10_01 | $W_{6,5}$ |
| | 0000_10_10 | $W_{2,6}$ | | 0000_10_10 | $W_{6,6}$ |
| | 0000_10_11 | $W_{2,7}$ | | 0000_10_11 | $W_{6,7}$ |
| | 0000_11_00 | $W_{3,4}$ | | 0000_11_00 | $W_{7,4}$ |
| | 0000_11_00 | $W_{3,5}$ | | 0000_11_00 | $W_{7,5}$ |
| | 0000_11_00 | $W_{3,6}$ | | 0000_11_00 | $W_{7,6}$ |
| | 0000_11_00 | $W_{3,7}$ | | 0000_11_00 | $W_{7,7}$ |

Referring to the above table, the memory location may indicate memory associated with a specific cell. In the examples of FIGS. 9A and 9B, memory associated with the first cell may indicate the memory 925-1, memory associated with the second cell may indicate the memory 925-2, memory associated with the third cell may indicate the memory 925-3, and memory associated with the fourth cell may indicate the memory 925-4. The bit string stored in the memory 925-1 may be the bit string 980. The bit string stored in the memory 925-2 may be the bit string 985. The bit string stored in the memory 925-3 may be the bit string 990. The bit string stored in the memory 925-4 may be the bit string 995. The precoding weight may indicate weights corresponding to 64 bit strings 970 for the 8x8 precoding matrix. Referring to the above description, the RU 220 may separate and store information on an 8x8 precoding matrix to be generated based on 64 bit strings 970 in four memories (e.g., the memories 925) rather than one memory. Accordingly, the RU 220 may provide substantially a service to one cell even when using four $4\times4$ precoding matrices. In other words, a service for one cell may be provided through the architecture of the RU 220 for a plurality of cells.

Referring to FIG. 9B, an example is illustrated in which the RU 220 for a plurality of cells uses a portion (e.g., the first set of MIMO layers and the third set of MIMO layers) of the entire MIMO layers to provide a service for one cell. In this case, in the example of FIG. 9B, the remaining layers (e.g., the second set of MIMO layers and the fourth set of MIMO layers) may not transmit a signal as the switches 955-1 and 955-3 operate in the off state. However, the embodiment of the present disclosure is not limited thereto. For example, the RU 220 (or base station 110) supporting a copy cell may transmit a signal on the copy cell through the remaining layers. For example, the copy cell may indicate the one cell supported by the portion of the layers. The signal transmitted on the copy cell may include substantially the same information (or data) as the signal transmitted on the one cell supported by the portion of the layers. In the example of FIG. 9B, an output terminal of the IFFT&CP add block 950-1 may be connected to an input terminal of digital front end and the RF analog circuit 960-2. Accordingly, the RU 220 may transmit a signal processed by the IFFT&CP add block 950-1 on the copy cell through the antenna elements 965-2. In addition, an output terminal of the IFFT&CP add block 950-3 may be connected to an input terminal of digital front end and the RF analog circuit 960-4. Accordingly, the RU 220 may transmit a signal processed by the IFFT&CP add block 950-3 on the copy cell through the antenna elements 965-4.

In FIG. 9C, examples of bit strings not considering PMI are illustrated for convenience of explanation, but the embodiment of the present disclosure is not limited thereto. For example, each of the bit string 970, the bit string 985, the bit string 990 and the bit string 995 may include information indicating PMI. For example, the PMI of the bit string 980, the bit string 985, the bit string 990, and the bit string 995 may correspond to each other. In addition, the PMI of each of the bit string 980, the bit string 985, the bit string 990 and the bit string 995 may be an index indicating a precoding matrix generated based on the bit strings 970. For example, the PMI of each of the bit string 980, the bit string 985, the bit string 990, and the bit string 995 may correspond to the PMI included in the bit string 970.

Referring back to FIGS. 9A and 9B, the address conversion device 920 may convert the bit string 970 for an 8x8 precoding matrix for one cell obtained from the processor 900 into bit strings 980, 985, 990, and 995 for a 4x4 precoding matrix, as in the example of FIG. 9C.

For example, when values of both the first bit 971a and the second bit 972a are 0, the address conversion device 920 may replace the first bits 971b of the bit string 970 with the first portion 981 of the bit string 980, and the second bits 972b of the bit string 970 with the second portion 980 with the second portion 982 of the bit string 980. The bit string 980 may be stored in memory 925-1 for the first cell. For example, a first set of layers (e.g., the first MIMO layer to the fourth MIMO layer) connected to the memory 925-1 may be MIMO layers for the first cell among a plurality of MIMO layers included in the RU 220. For example, the first set of MIMO layers may be associated with antenna elements 965-1.

For example, when a value of the first bit 971a is 0 and a value of the second bit 972a is 1, the address conversion device 920 may replace the first bits 971b of the bit string 970 with the first portion 986 of the bit string 985 and the second bits 972b of the bit string 970 with the second portion 987 of the bit string 985. The bit string 985 may be stored in memory 925-2 for the second cell. For example, a second set of layers (e.g., the fifth MIMO layer to the eighth MIMO layer) connected to the memory 925-2 may be MIMO layers for the second cell among a plurality of MIMO layers included in the RU 220. For example, the second set of MIMO layers may be associated with antenna elements 965-2.

For example, when a value of the first bit 971a is 1 and a value of the second bit 972a is 0, the address conversion device 920 may replace the first bits 971b of the bit string 970 with the first portion 991 of the bit string 990, and the second bits 972b of the bit string 990 with the second portion 992 of the bit string 990. The bit string 990 may be stored in memory 925-3 for the third cell. For example, a third set of layers (e.g., the ninth MIMO layer to the twelfth MIMO layer) connected to the memory 925-3 may be MIMO layers for the third cell among a plurality of MIMO layers included in the RU 220. For example, the third set of MIMO layers may be associated with antenna elements 965-3.

For example, when values of both the first bit 971a and the second bit 972a are 1, the address conversion device 920 may replace the first bits 971b of the bit string 970 with the first portion 996 of the bit string 995, and the second bits 972b of the bit string 970 with the second portion 997 of the bit string 995. The bit string 995 may be stored in memory 925-4 for the fourth cell. For example, a fourth set of layers (e.g., the thirteenth MIMO layer to the sixteenth MIMO layer) connected to the memory 925-4 may be MIMO layers for the fourth cell among a plurality of MIMO layers included in the RU 220. For example, the fourth set of MIMO layers may be associated with antenna elements 965-4.

Comparing FIG. 9A and FIG. 9B, FIG. 9A may illustrate a case where the RU 220 provides a service for four cells through 16 MIMO layers. For example, switches 935-1 to 935-8, switches 945-1 to 945-8, and switches 955-1 to 955-4 may all be maintained in the on state. For example, the RU 220 may align an input signal obtained from the DU for each layer through the buffer 930. The RU 220 may apply the 4x4 precoding matrix to data (or input signal) aligned for each layer, based on each of the precoding blocks 940 using a 4x4 precoding matrix. The output signal of precoding block 940-1 may be inputted to IFFT&CP add blocks 950-1 of the first set of MIMO layers. The output signal may be processed based on the IFFT&CP add blocks 950-1 and digital front end and RF analog circuits 960-1. The output signal of the precoding block 940-2 may be inputted to IFFT&CP add blocks 950-2 of the second set of MIMO layers. The output signal may be processed based on the IFFT&CP add blocks 950-2 and digital front end and RF analog circuits 960-2. The output signal may be processed based on IFFT&CP add blocks 950-3 and digital front end and RF analog circuits 960-3. The output signal of the precoding block 940-3 may be inputted to the IFFT&CP add blocks 950-3 of the third set of MIMO layers. The output signal of the precoding block 940-4 may be inputted to IFFT&CP add blocks 950-4 of the fourth set of MIMO layers. The output signal may be processed based on the IFFT&CP add blocks 950-4 and digital front end and RF analog circuits 960-4. The RU 220 may transmit a first signal outputted from the digital front end and RF analog circuits 960-1 on the first cell through the antenna elements 965-1. The RU 220 may transmit a second signal outputted from the digital front end and RF analog circuits 960-2 on the second cell through the antenna elements 965-2. The RU 220 may transmit a third signal outputted from the digital front end and RF analog circuits 960-3 on the third cell through the antenna elements 965-3. The RU 220 may transmit a fourth signal outputted from the digital front end and the RF analog circuits 960-4 on the fourth cell through the antenna elements 965-4.

In contrast, FIG. 9B may illustrate a case where the RU 220 provides a service for one cell through eight MIMO layers. For example, switches 935-1 to 935-8, switches 945-1 to 945-8, and at least a portion of switches 955-1 to 955-4 may all change from the on state to the off state. For example, among the switches 955-1 to 955-4, the switches 955-2 and the switches 955-4 may change from the on state to the off state. For example, the RU 220 may align an input signal obtained from the DU for each layer through the buffer 930. The RU 220 may transmit a portion of the data (or input signal) aligned for each layer to a plurality of precoding blocks through switches 935-1 to 935-8, and may not tramsmit another portion to the precoding block through the switches 935-1 to 935-8. For example, the RU 220 may transmit an input signal for the first set of MIMO layers to the precoding blocks 940-1 and the precoding blocks 940-3 connected through the switches 935-1 to 935-4. For example, the RU 220 may transmit an input signal for the second set of MIMO layers to the precoding block 940-2 and the precoding block 940-4 connected through the switches 935-5 to 935-8. The reason for transmitting the same input signal to the precoding blocks may be to set the input data identically, as in Equation 10 described above, in order to provide a service for one cell based on an architecture for a plurality of cells. The RU 220 may apply the 4x4 precoding matrix to data (or input signal) aligned for each layer based on each of the precoding blocks 940 using the 4x4 precoding matrix. Referring to the example of FIG. 9C, the four 4x4 precoding matrices used in the precoding blocks 940 may indicate substantially one 8x8 precoding matrix. The output signal of the precoding block 940-1 and the output signal of the precoding block 940-2 may be inputted to the IFFT&CP add blocks 950-1 of the first set of MIMO layers by being combined through the switches 945-1 to 945-4 in the control block 945a. The inputted signal may be processed based on the digital front end and RF analog circuits 960-1 connected to the IFFT&CP add blocks 950-1 as the switches 955-1 of the control block 955 is maintained in the on state. As the output signal of the precoding block 940-2 is combined to the output signal of the precoding block 940-1 through the switches 945-1 to 945-4, a signal may not be inputted to the IFFT&CP add blocks 950-2. Accordingly, the switches 955-2 of the control block 955 may be changed to the off state. The output signal of precoding block 940-3 and the output signal of precoding block 940-4 may be inputted to the IFFT&CP add blocks 950-3 of the third set of MIMO layers by being combined through the switches 945-5 to 945-8 in control block 945b. The inputted signal may be processed based on the digital front end and RF analog circuits 960-3 connected to the IFFT&CP add blocks 950-3 as the switches 955-3 of the control block 955 are maintained in the on state. As the output signal of the precoding block 940-4 is combined with the output signal of the precoding block 940-3 through the switches 945-5 to 945-8, a signal may not be inputted to the IFFT&CP add blocks 950-4. Accordingly, the switches 955-4 of the control block 955 may be changed to the off state. The RU 220 may transmit a signal outputted from the digital front end and RF analog circuits 960-1 and the digital front end and RF analog circuits 960-3 on the one cell through the antenna elements 965-1 and the antenna elements 965-3.

Referring to the above description, the RU 220 of FIG. 9B may provide a service for one cell by using a plurality of baseband signal processing blocks 940 associated with a plurality of MIMO layers. For example, the RU 220 may transmit signals corresponding to input data processed through precoding matrices (e.g., four 4x4 precoding matrices) for the plurality of MIMO layers from memories 925 associated with the plurality of MIMO layers to the one cell. In other words, the RU 220 may substantially support one cell even using four memories 925 and four baseband signal processing blocks 940 to support four cells.

In FIGS. 9A to 9C, an example of generating four 4x4 precoding matrices based on one 8x8 precoding matrix to support one cell is illustrated, but the embodiment of the present disclosure is not limited thereto. For example, the embodiment of the present disclosure may also be applied to a case where 16 2x2 precoding matrices are generated based on one 8x8 precoding matrix (i.e., service support for one cell through a 2x2 precoding matrix architecture for 16 cells). Alternatively, the embodiment of the present disclosure may include a case of generating four 2x2 precoding matrices based on one 4x4 precoding matrix and three 3x3 precoding matrices based on one 6x6 precoding matrix. Alternatively, the embodiment of the present disclosure may include a case of generating two 2x2 precoding matrices, one 1x1 precoding matrix, and one 3x3 precoding matrix, based on one 8x8 precoding matrix.

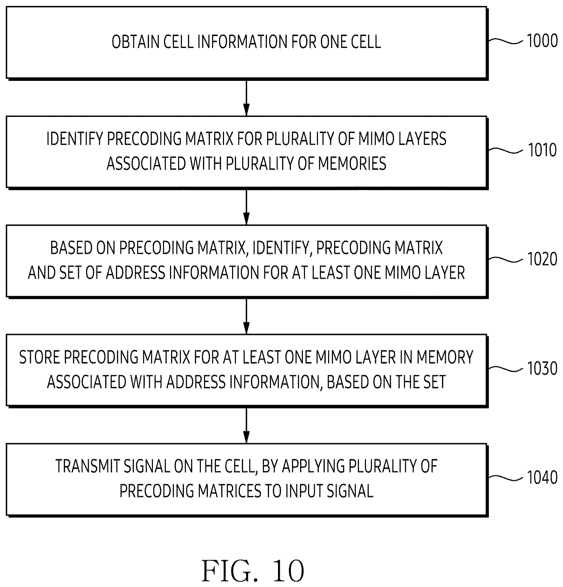

FIG. 10 illustrates an example of an operation flow supporting one cell through an RU architecture for a plurality of cells.

The RU architecture of FIG. 10 may indicate the RU 220 of FIGS. 9A and 9B. At least a portion of an operation flow of FIG. 10 may be performed by the RU 220 of FIGS. 9A and 9B. For example, at least a portion of the operation flow of FIG. 10 may be performed by the processor 900.

Referring to FIG. 10, in operation 1000, the RU 220 may obtain cell information for one cell. For example, the RU 220 may obtain the cell information from a DU through a fronthaul (e.g., the fronthaul transceiver 365 of FIG. 3B).

For example, the cell information may include at least one of the number of antenna elements of the RU 220 used to transmit and receive a signal on the cell, an antenna port of the antenna element of the RU 220 used to transmit and receive the signal, the number of layers (or MIMO layers) associated with the antenna elements, an index for indicating a precoding matrix (e.g., a precoding matrix indicator (PMI)), or information indicating a type of a codebook including the precoding matrix.

For example, the number of the antenna elements may include four (4T4R) and eight (8T8R). However, the embodiment of the present disclosure is not limited thereto. The number of the antenna elements may be set to more than 8 or less than 4. For example, the antenna port may indicate antenna port information for the antenna element used to transmit and receive the signal. For example, in a case that only four antenna elements are used to transmit and receive a signal on the cell even when the RU 220 includes eight antenna elements, it may indicate antenna port information with respect to each of the four antenna elements. For example, a type of the codebook may include single user-MIMO (SU-MIMO) or multiple user-MIMO (MU-MIMO).

In operation 1010, the RU 220 may identify a precoding matrix for a plurality of MIMO layers associated with a plurality of memories of the RU 220. In FIG. 10, for convenience of description, it is assumed as an example that the entire MIMO layers included in the RU 220 is 16, and the plurality of MIMO layers from among the entire MIMO layers is 8.

For example, the RU 220 may identify the plurality of MIMO layers for the cell based on the cell information. For example, the RU 220 may identify the plurality of MIMO layers for the cell, based on the number of MIMO layers for the cell included in the cell information, antenna port information, and the like. For example, the plurality of memories may include the memories 925 of FIGS. 9A and 9B. For example, the plurality of MIMO layers may indicate a portion of the entire MIMO layers included in the RU 220 associated with the memories.

In operation 1020, based on the precoding matrix, the RU 220 may identify a precoding matrix and a set of address information for at least one MIMO layer.

For example, based on the precoding matrix, which is an 8x8 matrix, the RU 220 may identify a first precoding matrix and a first set of address information for at least one first MIMO layer, a second precoding matrix and a second set of address information for at least one second MIMO layer, a third precoding matrix and a set of third address information for at least one third MIMO layer, and a fourth precoding matrix and a set of fourth address information for at least one fourth MIMO layer. For convenience of description, in FIG. 10, each of the at least one first MIMO layer, the at least one second MIMO layer, the at least one third MIMO layer, and the at least one fourth MIMO layer is assumed to be four MIMO layers. For example, the at least one first MIMO layer may be associated with a first memory among the plurality of memories. The at least one second MIMO layer may be associated with a second memory among the plurality of memories. The at least one third MIMO layer may be associated with a third memory among the plurality of memories. The at least one fourth MIMO layer may be associated with a fourth memory among the plurality of memories. Each of the plurality of memories may store 4x4 precoding matrices. For example, each of the first precoding matrix, the second precoding matrix, the third precoding matrix, and the fourth precoding matrix may be a 4x4 matrix.

For example, the RU 220 may identify the precoding matrix, based on a plurality of bit strings for the cell included in the cell information and precoding weights corresponding to the plurality of bit strings. For example, the plurality of bit strings and the precoding weights may be configured with 64 sets. For example, the RU 220 may identify the first address information based on a relationship between at least one first MIMO layer and the entire MIMO layers identified using the cell information. In the examples of FIGS. 9A to 9C, the first address information may indicate a 4x4 block matrix portion at the upper left among the 8x8 precoding matrix. For example, the first address information may include a specific bit (e.g., the first bit 971a and the second bit 972a) from among bit strings for the 8x8 precoding matrix. For example, a value of the specific bit may indicate a value corresponding to the upper left (e.g., 0). For example, the RU 220 may identify the second address information, based on a relationship between the entire MIMO layers identified using the cell information and the at least one second MIMO layer. In the examples of FIGS. 9A through 9C, the second address information may indicate a 4x4 block matrix portion at the upper right among the 8x8 precoding matrix. For example, the second address information may include a specific bit (e.g., the first bit 971a and the second bit 972a) from among bit strings for the 8x8 precoding matrix. For example, a value of the specific bit may indicate a value corresponding to the upper right (e.g., the value of the first bit 971a is 0 and the value of the second bit 972a is 1). For example, the RU 220 may identify the third address information, based on a relationship between the entire MIMO layers identified using the cell information and the at least one third MIMO layer. In the examples of FIGS. 9A to 9C, the third address information may indicate a 4x4 block matrix portion at the lower left among the 8x8 precoding matrix. For example, the third address information may include a specific bit (e.g., the first bit 971a and the second bit 972a) from among bit strings for the 8x8 precoding matrix. For example, a value of the specific bit may indicate a value corresponding to the lower left (e.g., the value of the first bit 971a is 1 and the value of the second bit 972a is 0). For example, the RU 220 may identify the fourth address information, based on a relationship between the entire MIMO layers identified using the cell information and the at least one fourth MIMO layer. In the examples of FIGS. 9A to 9C, the fourth address information may indicate a 4x4 block matrix portion at the lower right among the 8x8 precoding matrix. For example, the fourth address information may include a specific bit (e.g., the first bit 971a and the second bit 972a) from among bit strings for the 8x8 precoding matrix. For example, a value of the specific bit may indicate a value corresponding to the lower right (e.g., 1).

In operation 1030, the RU 220 may store a precoding matrix for at least one MIMO layer in memory associated with address information, based on the set.

For example, the RU 220 may store the first precoding matrix in the first memory based on the first precoding matrix and the set of first address information for the at least one first MIMO layer. For example, the RU 220 may identify a bit string for the first precoding matrix to be stored in memory (e.g., the first memory) corresponding to the first address information, based on a bit string for the 8x8 precoding matrix. For example, the first bit string for the first precoding matrix may include information on one of the plurality of bit strings for the 8x8 precoding matrix. The information on the bit string may include a location for a row and a location for a column within the precoding matrix indicated by one of the bit strings. The location for the row and the location for the column may indicate one element of the 8x8 precoding matrix. A value of an element in the first precoding matrix indicated by the first bit string may be determined as a precoding weight corresponding to the one element of the 8x8 precoding matrix.

For example, the RU 220 may store the second precoding matrix in the second memory based on the second precoding matrix and the set of second address information for the at least one second MIMO layer. For example, the RU 220 may identify a bit string for the second precoding matrix to be stored in memory (e.g., the second memory) corresponding to the second address information, based on a bit string for the 8x8 precoding matrix. For example, the second bit string for the second precoding matrix may include information on one of the plurality of bit strings for the 8x8 precoding matrix. The information on the bit string may include a location for a row and a location for a column within the 8x8 precoding matrix indicated by one of the bit strings. The location for the row and the location for the column may indicate one element of the 8x8 precoding matrix. A value of an element in the second precoding matrix indicated by the second bit string may be determined as a precoding weight corresponding to the one element of the 8x8 precoding matrix.

For example, the RU 220 may store the third precoding matrix in the third memory based on the third precoding matrix and the set of third address information for the at least one third MIMO layer. For example, the RU 220 may identify a bit string for the third precoding matrix to be stored in memory (e.g., the third memory) corresponding to the third address information, based on a bit string for the 8x8 precoding matrix. For example, the third bit string for the third precoding matrix may include information on one of the plurality of bit strings for the 8x8 precoding matrix. The information on the bit string may include a location for a row and a location for a column within the 8x8 precoding matrix indicated by one of the bit strings. The location for the row and the location for the column may indicate one element of the 8x8 precoding matrix. A value of an element in the third precoding matrix indicated by the third bit string may be determined as a precoding weight corresponding to the one element of the 8x8 precoding matrix.

For example, the RU 220 may store the fourth precoding matrix in the fourth memory based on the fourth precoding matrix and the set of fourth address information for the at least one fourth MIMO layer. For example, the RU 220 may identify a bit string for the fourth precoding matrix to be stored in memory (e.g., the fourth memory) corresponding to the fourth address information, based on a bit string for the 8x8 precoding matrix. For example, the fourth bit string for the fourth precoding matrix may include information on one of the plurality of bit strings for the 8x8 precoding matrix. The information on the bit string may include a location for a row and a location for a column within the 8x8 precoding matrix indicated by one of the bit strings. The location for the row and the location for the column may indicate one element of the 8x8 precoding matrix. A value of an element in the fourth precoding matrix indicated by the fourth bit string may be determined as a precoding weight corresponding to the one element of the 8x8 precoding matrix.

For example, each of the first bit string, the second bit string, the third bit string, and the fourth bit string may be identified based on information on an index to indicate the 4x4 precoding matrix. The information on the index may include a precoding matrix indicator (PMI). The information on the index indicating the 8x8 precoding matrix may be the same as information on an index included in each of the first bit string, the second bit string, the third bit string, and the fourth bit string. In other words, the information on the index indicating the 4x4 precoding matrix generated by each of the first bit string, the second bit string, the third bit string, and the fourth bit string may be the same as the PMI indicating the 8x8 precoding matrix.

In operation 1040, the RU 220 may transmit a signal on the cell, by applying the plurality of 4x4 precoding matrices to an input signal. For example, the RU 220 may obtain the input signal from the DU through the fronthaul. For example, the input signal may include data for the cell. For example, the data may be formed as an 8x1 vector. For example, the RU 220 may apply four 4x4 precoding matrices to the input signal, based on a plurality of precoding blocks (e.g., the precoding blocks 940). For example, the four 4x4 precoding matrices may include the first precoding matrix, the second precoding matrix, the third precoding matrix, and the fourth precoding matrix. In the 8x1 data, a signal for some MIMO layers may be copied in order to be inputted to the plurality of 4x4 precoding blocks corresponding to 16 MIMO layers. For example, a portion of the 8x1 data inputted to a precoding block (e.g., the precoding block 940-1) associated with the first to fourth MIMO layers may be copied to be inputted to a precoding block (e.g., the precoding block 940-3) associated with the ninth to twelfth MIMO layers. For example, the copy may be performed based on switches (e.g., switches 935-1 to 935-4 in FIG. 9B) in the control block. For example, the rest of the 8x1 data inputted to a precoding block (e.g., the precoding block 940-2) associated with the fifth to ninth MIMO layers may be copied to be inputted to a precoding block (e.g., the precoding block 940-4) associated with the thirteenth to sixteenth MIMO layers. For example, the copy may be performed based on switches (e.g., switches 935-5 to 935-8 in FIG. 9B) in the control block. The copy may indicate that a signal is branched.

For example, the RU 220 may process the input signal to which the four 4x4 precoding matrices are applied through digital front end and RF analog circuits (e.g., digital front end and RF analog circuits 960-1 and digital front end and RF analog circuits 960-3 in FIG. 9B). For example, the RU 220 may combine outputs of precoding blocks (e.g., the precoding block 940-1 and precoding block 940-2 of FIG. 9B) through switches (e.g., the switches 945-1 to 945-4 of FIG. 9B) in the control block. The RU 220 may process the combined output through the digital front end and RF analog circuits 960-1. For example, the RU 220 may combine outputs of precoding blocks (e.g., the precoding block 940-3 and precoding block 940-4 of FIG. 9B) through switches (e.g., switches 945-5 to 945-8 of FIG. 9B) in the control block. The RU 220 may process the combined output through the digital front end and RF analog circuits 960-3.

For example, the RU 220 may transmit a signal corresponding to the data on the cell by using antenna elements corresponding to the plurality of MIMO layers. For example, the RU 220 may transmit the signal processed by digital front end and RF analog circuits (e.g., the digital front end and RF analog circuits 960-1 the digital front end and RF analog circuits 960-3 of FIG. 9B) on the cell. For example, the signal may be transmitted through antenna elements (e.g., the antenna elements 965-1 and antenna elements 965-3 of FIG. 9B) associated with the digital front end and RF analog circuits.

Referring to the above description, the present disclosure proposes an electronic device and a method for supporting a plurality of cells by using an architecture to support one cell or for supporting one cell by using an architecture to support a plurality of cells. The electronic device and the method according to an embodiment of the present disclosure may substantially support a plurality of cells using an architecture to support one cell, by storing high-dimention precoding matrices (e.g., 8x8) in one memory using low-dimention precoding matrices (e.g., 4x4) obtained from a processor. In addition, the electronic device and the method according to an embodiment of the present disclosure may substantially support one cell using an architecture to support a plurality of cells, by storing low-dimention precoding matrices (e.g., 4x4) in a plurality of memories using high-dimention precoding matrices (e.g., 8x8) obtained from a processor. Accordingly, the electronic device and the method according to the embodiment of the present disclosure may reduce the amount of memory used and reduce power consumption. In addition, the electronic device and the method according to the embodiment of the present disclosure may provide a service for various network environments without generating a separate image for driving the processor. In addition, the electronic device and the method of the present disclosure may miniaturize the structure of the RU 220.

According to embodiments, a method performed by a radio unit (RU), the method may comprise obtaining, from a digital unit (DU), first cell information with respect to a first cell and second cell information with respect to a second cell. The method may comprise, based on the first cell information and the second cell information, identifying at least one first multiple input multiple output (MIMO) layer for the first cell and at least one second MIMO layer for the second cell from among a plurality of MIMO layers associated with memory of the RU. The method may comprise, based on the first cell information, identifying first address information for the at least one first MIMO layer from a first precoding matrix for the first cell and a precoding matrix for the plurality of MIMO layers. The method may comprise, based on the second cell information, identifying second address information for the at least second MIMO layer from a second precoding matrix for the second cell and the precoding matrix. The method may comprise, storing, on the memory, the precoding matrix identified based on the first precoding matrix, the second precoding matrix, the first address information, and the second address information.

According to an embodiment, the method may comprise obtaining an input signal including first data for the first cell and second data for the second cell. The method may comprise transmitting a first signal on the first cell and a second signal on the second cell, by applying the precoding matrix to the input signal. The first signal may indicate an output signal corresponding to the first data, and the second signal may indicate an output signal corresponding to the second data.

According to an embodiment, the first precoding matrix may be identified based on first bit strings and a first precoding weight corresponding to each of the first bit strings. Each of the first bit strings may include first information indicating a row in the first precoding matrix and second information indicating a column. A location of the first precoding weight within the first precoding matrix may be identified based on the first information and the second information. The second precoding matrix may be identified based on second bit strings and a second precoding weight corresponding to each of the second bit strings. Each of the second bit strings may include third information indicating a row in the first precoding matrix and fourth information indicating a column. A location of the second precoding weight within the second precoding matrix may be identified based on the third information and the fourth information.

According to an embodiment, the precoding matrix may be identified based on bit strings and precoding weight. Each of the bit strings may include the first information, the second information, and the first address information, or the third information, the fourth information, and the second address information. The precoding weight may have a value of one of the first precoding weight or the second precoding weight, based on address information included in the bit strings.

According to an embodiment, the precoding matrix may be a block diagonal matrix formed based on the first precoding matrix and the second precoding matrix. In the precoding matrix, remaining elements excluding elements of the block diagonal matrix may be formed as 0.

According to an embodiment, each of the first bit strings may be identified based on information with respect to an index for indicating the precoding matrix. Each of the second bit strings may be identified based on information with respect to the index.

According to an embodiment, each of the first cell information with respect to the first cell and the second cell information with respect to the second cell may include at least one of the number of the plurality of MIMO layers, antenna port information associated with each of the plurality of MIMO layers, or information indicating a type of a codebook including the precoding matrix. A type of the codebook may include single user-MIMO (SU-MIMO) or multiple user-MIMO (MU-MIMO).

According to embodiments, an electronic device for a RU may comprise a processor. The RU may comprise memory. The RU may comprise a fronthaul interface. The RU may comprise a plurality of MIMO layers associated with the other memory. The processor may be configured to obtain, via the fronthaul interface from a DU, first cell information with respect to a first cell and second cell information with respect to a second cell. The processor may be configured to, based on the first cell information and the second cell information, identify at least one first MIMO layer for the first cell and at least one second MIMO layer for the second cell from among the plurality of MIMO layers. The processor may be configured to, based on the first cell information, identify first address information for the at least one first MIMO layer from a first precoding matrix for the first cell and a precoding matrix for the plurality of MIMO layers. The processor may be configured to, based on the second cell information, identify second address information for the at least second MIMO layer from a second precoding matrix for the second cell and the precoding matrix. The processor may be configured to store, on the other memory, the precoding matrix identified based on the first precoding matrix, the second precoding matrix, the first address information, and the second address information.

According to an embodiment, the processor may be configured to obtain an input signal including first data for the first cell and second data for the second cell. The processor may be configured to transmit a first signal on the first cell and a second signal on the second cell, by applying the precoding matrix to the input signal. The first signal may indicate an output signal corresponding to the first data, and the second signal may indicate an output signal corresponding to the second data.

According to an embodiment, the first precoding matrix may be identified based on first bit strings and a first precoding weight corresponding to each of the first bit strings. Each of the first bit strings may include first information indicating a row in the first precoding matrix and second information indicating a column. A location of the first precoding weight within the first precoding matrix may be identified based on the first information and the second information. The second precoding matrix may be identified based on second bit strings and a second precoding weight corresponding to each of the second bit strings. Each of the second bit strings may include third information indicating a row in the first precoding matrix and fourth information indicating a column. A location of the second precoding weight within the second precoding matrix may be identified based on the third information and the fourth information.

According to an embodiment, the precoding matrix may be identified based on bit strings and precoding weight. Each of the bit strings may include the first information, the second information, and the first address information, or the third information, the fourth information, and the second address information. The precoding weight may have a value of one of the first precoding weight or the second precoding weight, based on address information included in the bit strings.

According to an embodiment, the precoding matrix may be a block diagonal matrix formed based on the first precoding matrix and the second precoding matrix. In the precoding matrix, remaining elements excluding elements of the block diagonal matrix may be formed as 0.

According to an embodiment, each of the first bit strings may be identified based on information with respect to an index for indicating the precoding matrix. Each of the second bit strings may be identified based on information with respect to the index.

According to an embodiment, each of the first cell information with respect to the first cell and the second cell information with respect to the second cell may include at least one of the number of the plurality of MIMO layers, antenna port information associated with each of the plurality of MIMO layers, or information indicating a type of a codebook including the precoding matrix. A type of the codebook may include single user-MIMO (SU-MIMO) or multiple user-MIMO (MU-MIMO).

According to embodiments, a method performed by a RU, the method may comprise obtaining, from a DU, cell information for a cell. The method may comprise, based on the cell information, identifying a precoding matrix for a plurality of MIMO layers associated with a plurality of memories of the RU. The plurality of MIMO layers for the cell may include at least one first MIMO layer, at least one second MIMO layer, at least one third MIMO layer, and at least one fourth MIMO layer. The method may comprise, based on the precoding matrix, identifying first address information for the at least one first MIMO layer from a first precoding matrix for the at least one first MIMO layer and the precoding matrix. The method may comprise, based on the precoding matrix, identifying second address information for the at least one second MIMO layer from a second precoding matrix for the at least one second MIMO layer and the precoding matrix. The method may comprise, based on the precoding matrix, identifying third address information for the at least one third MIMO layer from a third precoding matrix for the at least one third MIMO layer and the precoding matrix. The method may comprise, based on the precoding matrix, identifying fourth address information for the at least one fourth MIMO layer from a fourth precoding matrix for the at least one fourth MIMO layer and the precoding matrix. The method may comprise, storing the first precoding matrix in a first memory from among the plurality of memories associated with the first address information, the second precoding matrix in a second memory from among the plurality of memories associated with the second address information, the third precoding matrix in a third memory from among the plurality of memories associated with the third address information, and the fourth precoding matrix in a fourth memory from among the plurality of memories associated with the fourth address information.

According to an embodiment, the method may comprise obtaining an input signal including data for the cell. The method may comprise transmitting a signal on the cell, by applying the first precoding matrix, the second precoding matrix, the third precoding matrix, and the fourth precoding matrix to the input signal. The signal may indicate an output signal corresponding to the data.

According to an embodiment, the precoding matrix may be identified based on bit strings and a precoding weight corresponding to each of the bit strings. Each of the bit strings may include first information indicating a row in the precoding matrix and second information indicating a column. A location of the precoding weight within the precoding matrix may be identified based on the first information and the second information.

According to an embodiment, the first precoding matrix may be identified based on the precoding matrix and the first address information. The first address information may be identified based on a first bit of the first information and a second bit of the second information among the bit strings. The first bit may correspond to a most significant bit of the first information. The second bit may correspond to a most significant bit of the second information.

According to an embodiment, each of the first precoding matrix, the second precoding matrix, the third precoding matrix, and the fourth precoding matrix may include index information for indicating the precoding matrix.

According to an embodiment, the cell information with respect to the cell may include at least one of the number of the plurality of MIMO layers, antenna port information associated with each of the plurality of MIMO layers, or information indicating a type of a codebook including the precoding matrix. A type of the codebook may include single user-MIMO (SU-MIMO) or multiple user-MIMO (MU-MIMO).

According to embodiments, an electronic device for a RU may comprise memory storing instructions. The electronic device may comprise at least one processor. The electronic device may comprise other memory storing information for precoding. The electronic device may comprise a fronthaul interface. The electronic device may comprise a plurality of MIMO layers associated with the other memory. The instructions, when executed by the at least one processor individually and/or collectively, may cause the electronic device to obtain, via the fronthaul interface from a DU, first cell information with respect to a first cell and second cell information with respect to a second cell. The instructions, when executed by the at least one processor individually and/or collectively, may cause the electronic device to, based on the first cell information and the second cell information, identify at least one first MIMO layer for the first cell and at least one second MIMO layer for the second cell from among the plurality of MIMO layers. The instructions, when executed by the at least one processor individually and/or collectively, may cause the electronic device to, based on the first cell information, identify first address information for the at least one first MIMO layer from a first precoding matrix for the first cell and a precoding matrix for the plurality of MIMO layers. The instructions, when executed by the at least one processor individually and/or collectively, may cause the electronic device to, based on the second cell information, identify second address information for the at least second MIMO layer from a second precoding matrix for the second cell and the precoding matrix. The instructions, when executed by the at least one processor individually and/or collectively, may cause the electronic device to store, on the other memory, the precoding matrix identified based on the first precoding matrix, the second precoding matrix, the first address information, and the second address information.

According to an embodiment, the instructions, when executed by the at least one processor individually and/or collectively, may cause the electronic device to obtain an input signal including first data for the first cell and second data for the second cell. The instructions, when executed by the at least one processor individually and/or collectively, may cause the electronic device to transmit a first signal on the first cell and a second signal on the second cell, by applying the precoding matrix to the input signal. The first signal may indicate an output signal corresponding to the first data, and the second signal may indicate an output signal corresponding to the second data.

According to an embodiment, the first precoding matrix may be identified based on first bit strings and a first precoding weight corresponding to each of the first bit strings. Each of the first bit strings may include first information indicating a row in the first precoding matrix and second information indicating a column. A location of the first precoding weight within the first precoding matrix may be identified based on the first information and the second information. The second precoding matrix may be identified based on second bit strings and a second precoding weight corresponding to each of the second bit strings. Each of the second bit strings may include third information indicating a row in the first precoding matrix and fourth information indicating a column. A location of the second precoding weight within the second precoding matrix may be identified based on the third information and the fourth information.

According to an embodiment, the precoding matrix may be identified based on bit strings and precoding weight. Each of the bit strings may include the first information, the second information, and the first address information, or the third information, the fourth information, and the second address information. The precoding weight may have a value of one of the first precoding weight or the second precoding weight, based on address information included in the bit strings.

According to an embodiment, the precoding matrix may be a block diagonal matrix formed based on the first precoding matrix and the second precoding matrix. In the precoding matrix, remaining elements excluding elements of the block diagonal matrix may be formed as 0.

According to an embodiment, each of the first bit strings may be identified based on information with respect to an index for indicating the precoding matrix. Each of the second bit strings may be identified based on information with respect to the index.

According to an embodiment, each of the first cell information with respect to the first cell and the second cell information with respect to the second cell may include at least one of the number of the plurality of MIMO layers, antenna port information associated with each of the plurality of MIMO layers, or information indicating a type of a codebook including the precoding matrix. A type of the codebook may include single user-MIMO (SU-MIMO) or multiple user-MIMO (MU-MIMO).

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

**Claims**

1. A method performed by a radio unit (RU), the method comprising:

   obtaining, from a digital unit (DU), first cell information with respect to a first cell and second cell information with respect to a second cell;
   based on the first cell information and the second cell information, identifying at least one first multiple input multiple output (MIMO) layer for the first cell and at least one second MIMO layer for the second cell from among a plurality of MIMO layers associated with memory of the RU;
   based on the first cell information, identifying first address information for the at least one first MIMO layer from a first precoding matrix for the first cell and a precoding matrix for the plurality of MIMO layers;
   based on the second cell information, identifying second address information for the at least second MIMO layer from a second precoding matrix for the second cell and the precoding matrix; and
   storing, on the memory, the precoding matrix identified based on the first precoding matrix, the second precoding matrix, the first address information, and the second address information.

2. The method of claim 1,
   wherein the method further comprises:

   obtaining an input signal including first data for the first cell and second data for the second cell; and
   transmitting a first signal on the first cell and a second signal on the second cell, by applying the precoding matrix to the input signal,
   wherein the first signal indicates an output signal corresponding to the first data,
   wherein the second signal indicates an output signal corresponding to the second data.

3. The method of claim 1,

   wherein the first precoding matrix is identified based on first bit strings and a first precoding weight corresponding to each of the first bit strings,
   wherein each of the first bit strings includes first information indicating a row in the first precoding matrix and second information indicating a column,
   wherein a location of the first precoding weight within the first precoding matrix is identified based on the first information and the second information,
   wherein the second precoding matrix is identified based on second bit strings and a second precoding weight corresponding to each of the second bit strings,
   wherein each of the second bit strings includes third information indicating a row in the first precoding matrix and fourth information indicating a column,
   wherein a location of the second precoding weight within the second precoding matrix is identified based on the third information and the fourth information.

4. The method of claim 3,

   wherein the precoding matrix is identified based on bit strings and precoding weight,
   wherein each of the bit strings includes:

   the first information, the second information, and the first address information or
   the third information, the fourth information, and the second address information,
   wherein the precoding weight has a value of one of the first precoding weight or the second precoding weight, based on address information included in the bit strings.

**5.** The method of claim 4,

wherein the precoding matrix is a block diagonal matrix formed based on the first precoding matrix and the second precoding matrix,

wherein, in the precoding matrix, remaining elements excluding elements of the block diagonal matrix are formed as 0.

**6.** The method of claim 3,

wherein each of the first bit strings is identified based on information with respect to an index for indicating the precoding matrix,

wherein each of the second bit strings is identified based on information with respect to the index.

**7.** The method of claim 1,

wherein each of the first cell information with respect to the first cell and the second cell information with respect to the second cell includes at least one of the number of the plurality of MIMO layers, antenna port information associated with each of the plurality of MIMO layers, or information indicating a type of a codebook including the precoding matrix,

wherein a type of the codebook includes single user-MIMO (SU-MIMO) or multiple user-MIMO (MU-MIMO).

**8.** An electronic device for a RU comprising:

memory storing instructions;

at least one processor;

other memory storing information for precoding;

a fronthaul interface; and

a plurality of MIMO layers associated with the other memory,

wherein the instructions, when executed by the at least one processor individually and/or collectively, cause the electronic device to:

obtain, via the fronthaul interface from a DU, first cell information with respect to a first cell and second cell information with respect to a second cell;

based on the first cell information and the second cell information, identify at least one first MIMO layer for the first cell and at least one second MIMO layer for the second cell from among the plurality of MIMO layers;

based on the first cell information, identify first address information for the at least one first MIMO layer from a first precoding matrix for the first cell and a precoding matrix for the plurality of MIMO layers;

based on the second cell information, identify second address information for the at least second MIMO layer from a second precoding matrix for the second cell and the precoding matrix; and

store, on the other memory, the precoding matrix identified based on the first precoding matrix, the second precoding matrix, the first address information, and the second address information.

**9.** The electronic device of claim 8,

wherein the instructions, when executed by the at least one processor individually and/or collectively, cause the electronic device to:

obtain an input signal including first data for the first cell and second data for the second cell; and

transmit a first signal on the first cell and a second signal on the second cell, by applying the precoding matrix to the input signal,

wherein the first signal indicates an output signal corresponding to the first data,

wherein the second signal indicates an output signal corresponding to the second data.

**10.** The electronic device of claim 8,

wherein the first precoding matrix is identified based on first bit strings and a first precoding weight corresponding to each of the first bit strings,

wherein each of the first bit strings includes first information indicating a row in the first precoding matrix and second information indicating a column,

wherein location of the first precoding weight within the first precoding matrix is identified based on the first information and the second information,

wherein the second precoding matrix is identified based on second bit strings and a second precoding weight corresponding to each of the second bit strings,

wherein each of the second bit strings includes third information indicating a row in the first precoding matrix and fourth information indicating a column,

wherein a location of the second precoding weight within the second precoding matrix is identified based on the third information and the fourth information.

11. The electronic device of claim 10,

wherein the precoding matrix is identified based on bit strings and precoding weight,
wherein each of the bit strings includes:

the first information, the second information, and the first address information or
the third information, the fourth information, and the second address information,
wherein the precoding weight has a value of one of the first precoding weight or the second precoding weight, based on address information included in the bit strings.

12. The electronic device of claim 11,

wherein the precoding matrix is a block diagonal matrix formed based on the first precoding matrix and the second precoding matrix,
wherein, in the precoding matrix, remaining elements excluding elements of the block diagonal matrix are formed as 0.

13. The electronic device of claim 11,

wherein each of the first bit strings is identified based on information with respect to an index for indicating the precoding matrix,
wherein each of the second bit strings is identified based on information with respect to the index.

14. The electronic device of claim 8,

wherein each of the first cell information with respect to the first cell and the second cell information with respect to the second cell includes at least one of the number of the plurality of MIMO layers, antenna port information associated with each of the plurality of MIMO layers, or information indicating a type of a codebook including the precoding matrix,
wherein a type of the codebook includes SU-MIMO or MU-MIMO.

15. A method performed by a RU, the method comprising:

obtaining, from a DU, cell information for a cell;
based on the cell information, identifying a precoding matrix for a plurality of MIMO layers associated with a plurality of memories of the RU, the plurality of MIMO layers for the cell including at least one first MIMO layer, at least one second MIMO layer, at least one third MIMO layer, and at least one fourth MIMO layer;
based on the precoding matrix, identifying first address information for the at least one first MIMO layer from a first precoding matrix for the at least one first MIMO layer and the precoding matrix;
based on the precoding matrix, identifying second address information for the at least one second MIMO layer from a second precoding matrix for the at least one second MIMO layer and the precoding matrix;
based on the precoding matrix, identifying third address information for the at least one third MIMO layer from a third precoding matrix for the at least one third MIMO layer and the precoding matrix;
identifying fourth address information for the at least one fourth MIMO layer from a fourth precoding matrix for the at least one fourth MIMO layer and the precoding matrix; and
storing the first precoding matrix in a first memory from among the plurality of memories associated with the first address information, the second precoding matrix in a second memory from among the plurality of memories associated with the second address information, the third precoding matrix in a third memory from among the plurality of memories associated with the third address information, and the fourth precoding matrix in a fourth memory from among the plurality of memories associated with the fourth address information.

FIG. 1

FIG. 2

210

| DU | | |
|---|---|---|
| 310 | 320 | 330 |
| TRANSCEIVER | MEMORY | PROCESSOR |

FIG. 3A

220

RU

360

RF
TRANSCEIVER

365

FRONTHAUL
TRANSCEIVER

370

MEMORY

380

PROCESSOR

FIG. 3B

FIG. 4

FIG. 5A

FIG. 5B

FIG. 5C

FIG. 6A

EP 4 661 306 A1

FIG. 6B

FIG. 7A

**770**

ROW LOCATION (771)   COLUMN LOCATION (772)

| bit[7] | bit[6] | bit[5] | bit[4] | bit[3] | bit[2] | bit[1] | bit[0] |
|--------|--------|--------|--------|--------|--------|--------|--------|

MSB                                                                    LSB

‹Cell #1›

**79C**

ROW LOCATION (791)                COLUMN LOCATION (792)

| bit[7] | bit[6] | bit[5] | bit[4] | bit[3] | bit[2] | bit[1] | bit[0] |
|--------|--------|--------|--------|--------|--------|--------|--------|

MSB                                                                    LSB

791a        791b   792a            792b

**780**

ROW LOCATION (781)   COLUMN LOCATION (782)

| bit[7] | bit[6] | bit[5] | bit[4] | bit[3] | bit[2] | bit[1] | bit[0] |
|--------|--------|--------|--------|--------|--------|--------|--------|

MSB                                                                    LSB

‹Cell #2›

FIG. 7B

```
┌─────────────────────────────────────────────────────────────┐
│           OBTAIN FIRST CELL INFORMATION FOR FIRST CELL AND    │       800
│             SECOND CELL INFORMATION FOR SECOND CELL           │
└─────────────────────────────────────────────────────────────┘
                              │
                              ▼
┌─────────────────────────────────────────────────────────────┐
│     IDENTIFY AT LEAST ONE FIRST MIMO LAYER AND AT LEAST ONE   │
│        SECOND MIMO LAYER AMONG PLURALITY OF MIMO LAYERS       │       810
│              ASSOCIATED WITH MEMORY OF RU                     │
└─────────────────────────────────────────────────────────────┘
                              │
                              ▼
┌─────────────────────────────────────────────────────────────┐
│    IDENTIFY FIRST PRECODING MATRIX AND FIRST ADDRESS INFORMATION │
│ BASED ON FIRST CELL INFORMATION, AND SECOND PRECODING MATRIX AND │   820
│   SECOND ADDRESS INFORMATION BASED ON SECOND CELL INFORMATION │
└─────────────────────────────────────────────────────────────┘
                              │
                              ▼
┌─────────────────────────────────────────────────────────────┐
│      IDENTIFY PRECODING MATRIX FOR PLURALITY OF MIMO LAYERS,  │
│   BASED ON FIRST PRECODING MATRIX, SECOND PRECODING MATRIX,   │       830
│   FIRST ADDRESS INFORMATION, AND SECOND ADDRESS INFORMATION   │
└─────────────────────────────────────────────────────────────┘
                              │
                              ▼
┌─────────────────────────────────────────────────────────────┐
│   STORE PRECODING MATRIX IN MEMORY FOR PLURALITY OF MIMO LAYERS │     840
└─────────────────────────────────────────────────────────────┘
                              │
                              ▼
┌─────────────────────────────────────────────────────────────┐
│          TRANSMIT FIRST SIGNAL ON FIRST CELL AND SECOND SIGNAL │
│      ON SECOND CELL, BY APPLYING PRECODING MATRIX TO INPUT SIGNAL │   850
└─────────────────────────────────────────────────────────────┘
```

FIG. 8

FIG. 9A

FIG. 9B

ROW LOCATION (981) COLUMN LOCATION (982)

980

| bit[7] | bit[6] | bit[5] | bit[4] | bit[3] | bit[2] | bit[1] | bit[0] |
|---|---|---|---|---|---|---|---|
MSB                                                                  LSB

‹Cell #1›

ROW LOCATION (986) COLUMN LOCATION (987)

985

| bit[7] | bit[6] | bit[5] | bit[4] | bit[3] | bit[2] | bit[1] | bit[0] |
|---|---|---|---|---|---|---|---|
MSB                                                                  LSB

‹Cell #2›

ROW LOCATION (971)   COLUMN LOCATION (972)

970

| bit[7] | bit[6] | bit[5] | bit[4] | bit[3] | bit[2] | bit[1] | bit[0] |
|---|---|---|---|---|---|---|---|
MSB          971a    971b      972a    972b    LSB

ROW LOCATION (991) COLUMN LOCATION (992)

990

| bit[7] | bit[6] | bit[5] | bit[4] | bit[3] | bit[2] | bit[1] | bit[0] |
|---|---|---|---|---|---|---|---|
MSB                                                                  LSB

‹Cell #3›

ROW LOCATION (996) COLUMN LOCATION (997)

995

| bit[7] | bit[6] | bit[5] | bit[4] | bit[3] | bit[2] | bit[1] | bit[0] |
|---|---|---|---|---|---|---|---|
MSB                                                                  LSB

‹Cell #4›

FIG. 9C

OBTAIN CELL INFORMATION FOR ONE CELL — 1000

IDENTIFY PRECODING MATRIX FOR PLURALITY OF MIMO LAYERS ASSOCIATED WITH PLURALITY OF MEMORIES — 1010

BASED ON PRECODING MATRIX, IDENTIFY, PRECODING MATRIX AND SET OF ADDRESS INFORMATION FOR AT LEAST ONE MIMO LAYER — 1020

STORE PRECODING MATRIX FOR AT LEAST ONE MIMO LAYER IN MEMORY ASSOCIATED WITH ADDRESS INFORMATION, BASED ON THE SET — 1030

TRANSMIT SIGNAL ON THE CELL, BY APPLYING PLURALITY OF PRECODING MATRICES TO INPUT SIGNAL — 1040

FIG. 10

## INTERNATIONAL SEARCH REPORT

| International application No. |
|---|
| **PCT/KR2024/001243** |

| A. | CLASSIFICATION OF SUBJECT MATTER |
|---|---|
| | **H04B 7/0456**(2017.01)i; **H04B 7/0452**(2017.01)i; **H04L 25/03**(2006.01)i; **H04W 88/08**(2009.01)i; **H04W 92/20**(2009.01)i |

According to International Patent Classification (IPC) or to both national classification and IPC

| B. | FIELDS SEARCHED |
|---|---|

Minimum documentation searched (classification system followed by classification symbols)

H04B 7/0456(2017.01); H04B 7/0413(2017.01); H04B 7/06(2006.01); H04L 1/06(2006.01); H04L 1/18(2006.01); H04L 5/00(2006.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 셀 정보(cell information), MIMO 레이어(MIMO layer), 프리코딩 행렬(precoding matrix), 주소 정보(address information)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2022-0051202 A (ZTE CORPORATION) 26 April 2022 (2022-04-26)<br>See paragraphs [0637]-[0638]; claims 2, 5 and 9; and figures 8a-8b. | 1-15 |
| A | KR 10-2013-0021401 A (HUAWEI TECHNOLOGIES CO., LTD.) 05 March 2013 (2013-03-05)<br>See paragraphs [0028]-[0061]; and figure 1. | 1-15 |
| A | US 2021-0028835 A1 (APPLE INC.) 28 January 2021 (2021-01-28)<br>See paragraphs [0063]-[0077]; and figures 5-6. | 1-15 |
| A | US 2017-0155435 A1 (INTEL CORPORATION) 01 June 2017 (2017-06-01)<br>See paragraphs [0036]-[0058]; and figure 4. | 1-15 |
| A | US 2019-0319765 A1 (NOKIA TECHNOLOGIES OY) 17 October 2019 (2019-10-17)<br>See paragraphs [0165]-[0175]; and figure 5. | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 April 2024** | **30 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| | International application No. |
|---|---|
| | **PCT/KR2024/001243** |

| Patent document cited in search report | | | Publication date (day/month/year) | Patent family member(s) | | | Publication date (day/month/year) |
|---|---|---|---|---|---|---|---|
| KR | 10-2022-0051202 | A | 26 April 2022 | CN | 114258708 | A | 29 March 2022 |
| | | | | CN | 114258708 | B | 29 December 2023 |
| | | | | EP | 4014584 | A1 | 22 June 2022 |
| | | | | EP | 4014584 | A4 | 03 May 2023 |
| | | | | US | 2022-0174601 | A1 | 02 June 2022 |
| | | | | WO | 2021-031049 | A1 | 25 February 2021 |
| KR | 10-2013-0021401 | A | 05 March 2013 | AU | 2011-255148 | A1 | 10 January 2013 |
| | | | | AU | 2011-255148 | B2 | 24 July 2014 |
| | | | | AU | 2014-253522 | A1 | 13 November 2014 |
| | | | | AU | 2014-253522 | B2 | 18 June 2015 |
| | | | | AU | 2014-253522 | C1 | 12 November 2015 |
| | | | | BR | 112012029393 | A2 | 26 July 2016 |
| | | | | CN | 102255703 | A | 23 November 2011 |
| | | | | CN | 102255703 | B | 16 July 2014 |
| | | | | CN | 104135344 | A | 05 November 2014 |
| | | | | CN | 104135344 | B | 29 September 2017 |
| | | | | CN | 104158626 | A | 19 November 2014 |
| | | | | CN | 104158626 | B | 17 November 2017 |
| | | | | EP | 2562953 | A1 | 27 February 2013 |
| | | | | EP | 2562953 | B1 | 13 August 2014 |
| | | | | EP | 2773059 | A2 | 03 September 2014 |
| | | | | EP | 2773059 | A3 | 29 October 2014 |
| | | | | EP | 2773059 | B1 | 21 September 2016 |
| | | | | ES | 2515492 | T3 | 29 October 2014 |
| | | | | HR | P20161662 | T1 | 13 January 2017 |
| | | | | JP | 2013-529438 | A | 18 July 2013 |
| | | | | JP | 2015-053695 | A | 19 March 2015 |
| | | | | JP | 5635684 | B2 | 03 December 2014 |
| | | | | JP | 5967727 | B2 | 10 August 2016 |
| | | | | PL | 2562953 | T3 | 30 January 2015 |
| | | | | PT | 2562953 | E | 16 October 2014 |
| | | | | RU | 2012154913 | A | 27 June 2014 |
| | | | | RU | 2551819 | C2 | 27 May 2015 |
| | | | | US | 2013-0077709 | A1 | 28 March 2013 |
| | | | | US | 8989299 | B2 | 24 March 2015 |
| | | | | WO | 2011-144038 | A1 | 24 November 2011 |
| US | 2021-0028835 | A1 | 28 January 2021 | US | 10848211 | B2 | 24 November 2020 |
| | | | | US | 2020-0014432 | A1 | 09 January 2020 |
| US | 2017-0155435 | A1 | 01 June 2017 | CN | 102742173 | A | 17 October 2012 |
| | | | | CN | 102742193 | A | 17 October 2012 |
| | | | | CN | 103168432 | A | 19 June 2013 |
| | | | | CN | 103168432 | B | 24 August 2016 |
| | | | | CN | 103181106 | A | 26 June 2013 |
| | | | | CN | 103181106 | B | 10 February 2016 |
| | | | | EP | 2622761 | A1 | 07 August 2013 |
| | | | | EP | 2622761 | A4 | 08 February 2017 |
| | | | | EP | 2622761 | B1 | 12 June 2019 |
| | | | | EP | 2622891 | A2 | 07 August 2013 |
| | | | | EP | 2622891 | A4 | 15 February 2017 |
| | | | | EP | 2636161 | A1 | 11 September 2013 |

Form PCT/ISA/210 (patent family annex) (July 2022)

## INTERNATIONAL SEARCH REPORT
### Information on patent family members

| International application No. |
|---|
| **PCT/KR2024/001243** |

| Patent document cited in search report | Publication date (day/month/year) | Patent family member(s) | | | Publication date (day/month/year) |
|---|---|---|---|---|---|
| | | EP | 2636168 | A2 | 11 September 2013 |
| | | EP | 2636168 | A4 | 09 April 2014 |
| | | EP | 2636170 | A1 | 11 September 2013 |
| | | EP | 2636170 | A4 | 23 July 2014 |
| | | EP | 2652892 | A1 | 23 October 2013 |
| | | EP | 2652892 | A4 | 07 May 2014 |
| | | EP | 2652928 | A2 | 23 October 2013 |
| | | EP | 2652928 | A4 | 20 December 2017 |
| | | EP | 2666244 | A2 | 27 November 2013 |
| | | EP | 2666244 | A4 | 09 July 2014 |
| | | HK | 1212538 | A1 | 10 June 2016 |
| | | TW | 201230746 | A | 16 July 2012 |
| | | TW | 201524171 | A | 16 June 2015 |
| | | TW | 201739229 | A | 01 November 2017 |
| | | TW | I467991 | B | 01 January 2015 |
| | | TW | I587673 | B | 11 June 2017 |
| | | TW | I656770 | B | 11 April 2019 |
| | | US | 2012-0082077 | A1 | 05 April 2012 |
| | | US | 2012-0082082 | A1 | 05 April 2012 |
| | | US | 2012-0082084 | A1 | 05 April 2012 |
| | | US | 2012-0082100 | A1 | 05 April 2012 |
| | | US | 2012-0082190 | A1 | 05 April 2012 |
| | | US | 2012-0113830 | A1 | 10 May 2012 |
| | | US | 2012-0113839 | A1 | 10 May 2012 |
| | | US | 2012-0114028 | A1 | 10 May 2012 |
| | | US | 2013-0148560 | A1 | 13 June 2013 |
| | | US | 2013-0336305 | A1 | 19 December 2013 |
| | | US | 2015-0109976 | A1 | 23 April 2015 |
| | | US | 8644289 | B2 | 04 February 2014 |
| | | US | 8687727 | B2 | 01 April 2014 |
| | | US | 8711907 | B2 | 29 April 2014 |
| | | US | 8717967 | B2 | 06 May 2014 |
| | | US | 8804593 | B2 | 12 August 2014 |
| | | US | 8817644 | B2 | 26 August 2014 |
| | | US | 8873480 | B2 | 28 October 2014 |
| | | US | 9049735 | B2 | 02 June 2015 |
| | | US | 9197371 | B2 | 24 November 2015 |
| | | US | 9197372 | B2 | 24 November 2015 |
| | | US | 9525471 | B2 | 20 December 2016 |
| | | US | 9843367 | B2 | 12 December 2017 |
| | | US | 9872307 | B2 | 16 January 2018 |
| | | WO | 2012-044902 | A1 | 05 April 2012 |
| | | WO | 2012-045055 | A2 | 05 April 2012 |
| | | WO | 2012-045055 | A3 | 05 July 2012 |
| | | WO | 2012-060733 | A1 | 10 May 2012 |
| | | WO | 2012-060921 | A1 | 10 May 2012 |
| | | WO | 2012-060922 | A1 | 10 May 2012 |
| | | WO | 2012-060924 | A2 | 10 May 2012 |
| | | WO | 2012-060924 | A3 | 28 June 2012 |
| | | WO | 2012-061053 | A2 | 10 May 2012 |

Form PCT/ISA/210 (patent family annex) (July 2022)

**INTERNATIONAL SEARCH REPORT**
Information on patent family members

International application No.

**PCT/KR2024/001243**

| Patent document cited in search report | | | Publication date (day/month/year) | Patent family member(s) | | | Publication date (day/month/year) |
|---|---|---|---|---|---|---|---|
| | | | | WO | 2012-061053 | A3 | 28 June 2012 |
| | | | | WO | 2012-061605 | A2 | 10 May 2012 |
| | | | | WO | 2012-061605 | A3 | 02 August 2012 |
| | | | | WO | 2012-061734 | A2 | 10 May 2012 |
| | | | | WO | 2012-061734 | A3 | 05 July 2012 |
| US | 2019-0319765 | A1 | 17 October 2019 | EP | 3553967 | A1 | 16 October 2019 |
| | | | | EP | 3553967 | B1 | 01 November 2023 |
| | | | | US | 10880064 | B2 | 29 December 2020 |

Form PCT/ISA/210 (patent family annex) (July 2022)